# EUROPEAN PATENT SPECIFICATION

(11) **EP 2 642 008 B1**
(45) Date of publication and mention of the grant of the patent: **05.10.2016**
(21) Application number: 11841182.6
(22) Date of filing: 10.11.2011
(51) Int. Cl.: D04H 1/4291, C08F 2/44, C08F 10/00, C08K 9/04, C08L 23/00

(54) **METHOD FOR STABILIZING POLYMER FOR LONG TERM, METHOD FOR PRODUCING NONWOVEN FABRIC, AND METHOD FOR PRODUCING ELASTOMER COMPOSITION**
VERFAHREN ZUR STABILISIERUNG VON POLYMER FÜR EIN LANGZEITVERFAHREN ZUR HERSTELLUNG VON VLIESSTOFF UND VERFAHREN ZUR HERSTELLUNG EINER ELASTOMERZUSAMMENSETZUNG
PROCÉDÉ DE STABILISATION D'UN POLYMÈRE SUR UNE LONGUE DURÉE, PROCÉDÉ DE FABRICATION D'UN TISSU NON TISSÉ ET PROCÉDÉ DE FABRICATION D'UNE COMPOSITION ÉLASTOMÈRE

(30) Priority: 16.11.2010 JP 2010256326; 16.11.2010 JP 2010256327; 25.11.2010 JP 2010262915
(43) Date of publication of application: 25.09.2013
(60) Divisional application: 16158268.9
(73) Proprietor: Adeka Corporation, Tokyo 1160012 (JP)
(72) Inventor: KAWAMOTO, Naoshi, Saitama-shi Saitama 336-0022 (JP); URUSHIHARA, Tsuyoshi, Saitama-shi Saitama 336-0022 (JP); OKAMOTO, Kohei, Saitama-shi Saitama 336-0022 (JP); SEGUCHI, Tetsuya, Saitama-shi Saitama 336-0022 (JP)
(74) Representative: Gill Jennings & Every LLP
(86) International application number: PCT/JP2011/075978
(87) International publication number: WO 2012/067017

(56) References cited:
- EP-A1- 0 972 800
- EP-A1- 1 275 763
- EP-A1- 1 857 468
- JP-A- 4 348 148
- JP-A- 9 296 347
- JP-A- 63 172 713
- JP-A- 2006 282 985

## Description

### TECHNICAL FIELD

The present invention also relates to a method of producing a polymer. More particularly, the present invention relates to a method of producing a polymer which is capable of reducing the amount of stabilizer to be used and producing a polymer that shows excellent initial coloration and long-term stability.

### BACKGROUND ART

As a method of obtaining a nonwoven fabric, for example, a spun bond method, a melt-blown method, a spun-lace method, a thermal bonding method, a chemical bonding method, an air-laid method, a needle-punch method and flash spinning may be employed, and nonwoven fabrics are produced using fibers of various diameters.

Nonwoven fabrics are used in a variety of applications including seat covers used in cars, trains, airplanes and theaters; cushion materials; infection-preventing medical nonwoven fabrics; disinfectant wipes; sanitary goods; diapers; top sheets of sanitary items such as diaper covers; socks; underwears; white lab coats; covers; bed sheets; curtains; table cloths; mats; pillowcases; toiletry goods; wall covering materials such as wallpapers; wiping cloths such as general wipes, dish towels and pre-moistened wipes; tea bag-type food packaging materials for coffee, tea and the like; and filtration filters.

Thereamong, as filters used for liquid filtration, polyolefin-made filters that are inexpensive and exhibit good alkali resistance, oxidation resistance and chemical resistance as well as moderate rigidity and excellent antibacterial properties are utilized.

For example, Patent Document 1 discloses a filter cartridge which utilizes a nonwoven fabric formed by a melt spinning method from a polypropylene homopolymer polymerized using a metallocene catalyst.

In addition, Patent Document 2 discloses a nonwoven fabric utilizing a polyolefin having a weight-average molecular weight of 50,000 to 200,000, in which the weight fraction of a low-molecular-weight substance having a molecular weight of not greater than 2,000 in a molecular-weight distribution curve and that of a high-molecular-weight substance having a molecular weight of not less than 1,000,000 are both less than 1%.

In general, polyolefins have poor stability against heat and light and are thus easily oxidized and degraded when exposed to a high-temperature environment or a strong light, so that there is a problem that the required service life as a product cannot be attained. In order to prevent such oxidation and degradation, stabilizers such as a phenolic antioxidant, a phosphorus-based antioxidant, a sulfur-based antioxidant, a hydroxylamine compound, a hindered amine compound, an ultraviolet absorber and an acid scavenger are commonly added. In particular, phenolic antioxidants exhibit high stabilization effect against thermal oxidation of polyolefins and are capable of imparting a polyolefin with resistance to oxidation and discoloration during storage; therefore, phenolic antioxidants have high utility value as a stabilizer of polyolefins.

Thermoplastic elastomers do not require vulcanization step and have thermosetting rubber-like flexibility at normal temperature. In addition, thermoplastic elastomers can be allowed to embody a variety of physical properties by a phase separation operation and has thermoplastic plastic-like processability. Since thermoplastic elastomers are advantageous in that, for example, they can be processed using a conventional molding machine for thermoplastic resins, the use of thermoplastic elastomers have been developed in a wide range of fields including automobile components, industrial components, parts of electronic products and home electrical appliances, footwears, miscellaneous goods, stationery products, sports equipments and sundry goods. In particular, olefin-based thermoplastic elastomer compositions have excellent dynamic properties such as tensile strength at break and elongation; therefore, they can replace those applications of conventional vulcanized rubbers.

However, since olefins themselves are degraded by heat and light, olefin-based thermoplastic elastomers are generally stabilized by an addition of various stabilizers such as phenolic antioxidants, phosphorus-based antioxidants, sulfur-based antioxidants, hydroxylamine compounds, hindered amine compounds, ultraviolet absorbers and acid scavengers.

As a method of adding the above-described stabilizers, for example, a variety of stabilizers are added to a fine powdery polymer obtained by polymerization of a monomer and the resultant is then melt-kneaded and pelletized using a processing machine such as an extruder.

For example, Patent Document 3 proposes a method in which an olefin-based thermoplastic elastomer is stabilized by melt-kneading it with a stabilizer composition containing a phenolic antioxidant such as tetrakis[methylene-3-(3,5-di-t-butyl-4-hydroxyphenyl)propionate]methane. However, since the stabilizer composition is hardly dispersed in a resin, in order to prevent irregularities caused by the addition thereof, it is required that the stabilizer composition be added in an amount more than necessary. Consequently, there are problems of a reduction in the physical properties of the resulting elastomer caused by the addition of the stabilizer composition in a large amount; occurrence of bleeding of the stabilizer composition or fogging; and coloration of the thermoplastic elastomer caused by the stabilizer composition itself.

Incidentally, because of the recent advancements in the polymerization technologies, it is now possible to directly obtain a polymer in the form of granules and a stabilized polymer can be obtained by a method in which polymerization is performed with an addition of a stabilizer composition to a polymerization catalyst, a polymerization apparatus or a piping thereof. This method can omit the step of blending the stabilizer composition by melt-kneading after polymerization and a stabilizer can be uniformly dispersed in the resulting polymer; therefore, the amount of the stabilizer to be added can be consequently reduced. However, since a phenol compound adversely affects the polymerization catalyst to impair the polymerization, a stabilizer composition containing a phenolic antioxidant could not be added in the polymerization step.

In Patent Documents 4, 5 and 6, the present inventors have proposed methods in which, by using a phenolic antioxidant masked with an organoaluminum compound at the time of polymerizing a monomer having an ethylenically unsaturated bond, the resulting polymer is stabilized without impairing the activity of a polymerization catalyst even when the phenolic antioxidant is added before or during the polymerization.

Meanwhile, among polymers, those polymers that are obtained from a monomer having an ethylenically unsaturated bond, such as olefin resins, are inexpensive and have a low density and good moldability; therefore, the use of such polymers have been developed in a wide range of fields.

However, such polymers obtained from a monomer having an ethylenically unsaturated bond have poor stability against heat and light and are thus easily oxidized and degraded when exposed to a high temperature during molding process or a strong light, so that the service life required for a plastic article cannot be attained. In order to prevent such oxidation and degradation, stabilizers such as a phenolic antioxidant, a phosphorus-based antioxidant, a sulfur-based antioxidant, a hydroxylamine compound, a hindered amine compound, an ultraviolet absorber and an acid scavenger are commonly added, and there is a demand for a polymer which is excellent in cost performance and exhibits sufficient stabilization effect.

Examples of a method of adding a stabilizer to a polymer obtained from a monomer having an ethylenically unsaturated bond include a method in which a polymer obtained by polymerization of a monomer having an ethylenically unsaturated bond and a stabilizer are mixed and the resulting mixture is melt-kneaded using a molding machine such as an extruder to disperse the stabilizer in the polymer; and a method of obtaining a stabilized polymer by adding a stabilizer before or during polymerization of a monomer having an ethylenically unsaturated bond.

However, such a method in which a polymer and a stabilizer are blended by melt-kneading is economically disadvantageous since the stabilizer is must be added in an amount more than necessary in order to mitigate the problem of defective dispersion of the stabilizer.

Further, in a method where a stabilizer is added before or during polymerization of a monomer having an ethylenically unsaturated bond, although the stabilizer can be easily and uniformly dispersed in the resulting resin, since the interaction between the stabilizer and a metal polymerization catalyst may cause coloration of the resulting polymer and/or deterioration in its physical properties, there are problems is that, for example, the polymerization conditions and control thereof are complicated.

For example, in Patent Document 7, it is described that phenolic antioxidants widely used in polyolefins, such as tetrakis(3-(3,5-di-t-butyl-4-hydroxyphenyl)propionyloxymethyl)methane, cannot be added before polymerization since they inhibit the catalytic activities of polymerization catalysts. Patent Document 7 thus proposes a method in which a complex is formed with an ether compound on a Ziegler catalyst supported on magnesium chloride and a specific phenolic antioxidant is used. However, since the catalyst treatment process of this method is complicated, a method of stabilizing a polymer which is more convenient and does not restrict the catalytic actions has been demanded.

In Patent Documents 4, 5, 6 and the like, the present inventors have proposed methods of stabilizing a polymer without impairing the activity of a polymerization catalyst, which comprise the step of masking a phenolic antioxidant by mixing it with an organic aluminum compound normally used in olefin polymerization in an existing catalyst feed tank or polymerization vessel.

### RELATED ART DOCUMENTS

### PATENT DOCUMENTS

Patent Document 1: WO 2005/084777
Patent Document 2: Japanese Unexamined Patent Application Publication No. H9-296347
Patent Document 3: Japanese Unexamined Patent Application Publication No. H5-9342
Patent Document 4: Japanese Unexamined Patent Application Publication No. 2005-206625
Patent Document 5: Japanese Unexamined Patent Application Publication No. 2005-255953
Patent Document 6: Japanese Unexamined Patent Application Publication No. 2006-282985
Patent Document 7: Japanese Unexamined Patent Application Publication No.H5-271335

### SUMMARY OF THE INVENTION

### PROBLEMS TO BE SOLVED BY THE INVENTION

In the methods disclosed in the above-described Patent Documents 4 to 7, there is a problem that, when the resulting polymer is exposed to heat, oxygen or light over a prolonged period of time, the stabilizer components contained therein are consumed and degradation of the polymer consequently progresses. In order to stabilize a polymer over a long time, it is thought to increase the amount of antioxidant to be added; however, an addition of a stabilizer(s) in a large amount not only is economically disadvantageous, but also poses problems that, for example, the coloration of the stabilizer itself affects the resulting polymer to be colored. An object of the present invention is to provide a method of producing a polymer which is capable of producing a polymer that exhibits excellent cost performance, good color tone and excellent long-term stability.

### MEANS FOR SOLVING THE PROBLEMS

In view of the above-described current circumstances, the present inventors intensively studied to discover that the above-described problems can be solved by adding a specific phenolic antioxidant before or during polymerization of a monomer having an ethylenically unsaturated bond, thereby completing the present invention.

Further, the present inventors also discovered that the above-described problems can be solved by using a method of producing a polymer which comprises the steps of: polymerizing a monomer having an ethylenically unsaturated bond with an addition of a specific stabilizer before or during the polymerization; and melt-kneading the resulting polymer with an addition of a specific stabilizer, thereby completing the present invention.

The method of producing a polymer according to the present invention is characterized by comprising the steps of:
polymerizing a monomer having an ethylenically unsaturated bond with an addition of 0.0001 to 0.3 parts by mass of a phenolic antioxidant represented by the following Formula (2), which is masked with an organoaluminum compound, and 0.0001 to 0.3 parts by mass of a phosphorus-based antioxidant with respect to 100 parts by mass of a polymer obtained in this polymerization step, the addition being made to at least one of a catalyst system, a polymerization system and a piping before or during the polymerization of the monomer having an ethylenically unsaturated bond; and
melt-kneading the polymer obtained in the above-described polymerization step with an addition of a total of 0.001 to 3 parts by mass of a phenolic antioxidant and/or a phosphorus-based antioxidant with respect to 100 parts by mass of the polymer: 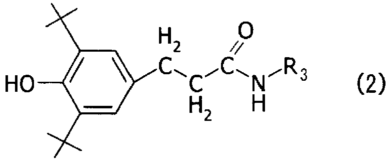
(wherein, R₃ represents an alkyl group having 1 to 30 carbon atoms which is optionally branched, a cycloalkyl group having 3 to 12 carbon atoms which is optionally substituted or an aryl group having 6 to 18 carbon atoms which is optionally substituted).

In the method of producing a polymer according to the present invention, it is preferred that, in the above-described polymerization step, the phenolic antioxidant represented by the Formula (2), which is masked with an organoaluminum compound, and the phosphorus-based antioxidant be added to the catalyst system, the polymerization system or the piping in a total amount of 0.001 to 0.5 parts by mass with respect to 100 parts by mass of the polymer obtained in the polymerization step.

Further, in the method of producing a polymer according to the present invention, it is preferred that the above-described organoaluminum compound be triethylaluminum.

Further, in the method of producing a polymer according to the present invention, it is preferred that, in the above-described melt-kneading step, a thioether-based antioxidant be further added in an amount of 0.001 to 0.3 parts by mass with respect to 100 parts by mass of the polymer obtained in the above-described polymerization step.

### EFFECTS OF THE INVENTION

By the present invention, a method of producing a polymer, which is capable of producing a polymer that exhibits excellent cost performance, good color tone and excellent long-term stability, can be provided.

### MODE FOR CARRYING OUT THE INVENTION

The method of producing a polymer according to the present invention is characterized by comprising the polymerization step and the melt-kneading step. As for other steps such as the step of preparing a catalyst, the step of feeding a material monomer and the step of recovering polymerization product, those methods that are known to be used in polymerization of a monomer having an ethylenically unsaturated bond can be employed.

The polymerization step and the melt-kneading step will now be described.

### [Polymerization Step]

In the method of producing a polymer according to the present invention, the polymerization step is a step of polymerizing a monomer having an ethylenically unsaturated bond with an addition of a phenolic antioxidant represented by the following Formula (2), which is masked with an organoaluminum compound, and a phosphorus-based antioxidant, the addition being made to at least one of a catalyst system, a polymerization system and a piping before or during the polymerization of the monomer. The above-described phenolic antioxidant and phosphorus-based antioxidant may be added separately, or they may be mixed in advance to be added. 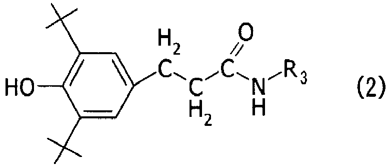 (wherein, R₃ represents an alkyl group having 1 to 30 carbon atoms which is optionally branched, a cycloalkyl group having 3 to 12 carbon atoms which is optionally substituted or an aryl group having 6 to 18 carbon atoms which is optionally substituted).

Examples of the alkyl group having 1 to 30 carbon atoms which is optionally branched or substituted and represented by R₃ in the above-described Formula (2) include methyl group, ethyl group, propyl group, isopropyl group, butyl group, sec-butyl group, t-butyl group, isobutyl group, pentyl group, isopentyl group, t-pentyl group, hexyl group, heptyl group, n-octyl group, isooctyl group, t-octyl group, nonyl group, isononyl group, decyl group, undecyl group, dodecyl group, tridecyl group, tetradecyl group, pentadecyl group, hexadecyl group, heptadecyl group and octadecyl group; however, in the present invention, an alkyl group having 12 to 24 carbon atoms is particularly preferred. When the alkyl group has less than 12 carbon atoms, the phenolic antioxidant may be easily vaporized, while when the alkyl group has more than 24 carbon atoms, the ratio of phenol to the molecular weight of the phenolic antioxidant is decreased, so that the stabilizing effect may be reduced.

The above-described alkyl group is also optionally interrupted by an oxygen atom, a sulfur atom or the later-described aryl group, and the hydrogen atoms of the alkyl group are also optionally substituted with a hydroxy group, a cyano group, an alkenyl group, a chain aliphatic group such as an alkenyloxy group, pyrrole, furan, thiophene, imidazole, oxazole, thiazole, pyrazole, isoxazole, isothiazole, pyridine, pyridazine, pyrimidine, pyrazine, piperidine, piperazine, morpholine, 2H-pyran, 4H-pyran, phenyl, biphenyl, triphenyl, naphthalene, anthracene, pyrrolidine, pyrindine, indolizine, indole, isoindole, indazole, purine, quinolizine, quinoline, isoquinoline or a cyclic aliphatic group such as a cycloalkyl group. In addition, these interruptions or substitutions may also exist in combination.

Examples of the cycloalkyl group having 3 to 12 carbon atoms which is optionally substituted and represented by R₃ in the above-described Formula (2) include cyclopropyl group, cyclopentyl group, cyclohexyl group, cycloheptyl group, cyclooctyl group, cyclononyl group and cyclodecyl group. The hydrogen atoms of the cycloalkyl group are optionally substituted with an alkyl group, an alkenyl group, an alkenyloxy group, a hydroxy group or a cyano group and the alkyl group is also optionally interrupted by an oxygen atom or a sulfur atom.

Examples of the aryl group having 6 to 18 carbon atoms which is optionally substituted and represented by R₃ in the above-described Formula (2) include phenyl group, methylphenyl group, butylphenyl group, octylphenyl group, 4-hydroxyphenyl group, 3,4,5-trimethoxyphenyl group, 4-t-butylphenyl group, biphenyl group, naphthyl group, methylnaphthyl group, anthracenyl group, phenanthryl group, benzyl group, phenylethyl group and 1-phenyl-1-methylethyl group. Further, the hydrogen atoms of the aryl group are optionally substituted with an alkyl group, an alkenyl group, an alkenyloxy group, a hydroxy group or a cyano group and the alkyl group is also optionally interrupted by an oxygen atom or a sulfur atom.

Specific examples of the structure of the phenolic antioxidant represented by the Formula (2) include the below-described compounds No. 1 to No. 16. However, the present invention is not restricted to the above-described compounds by any means.

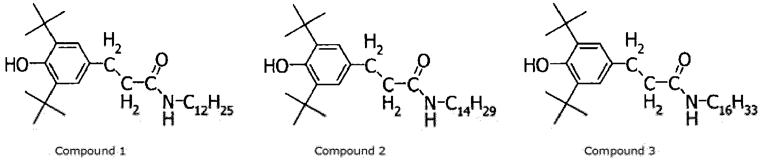

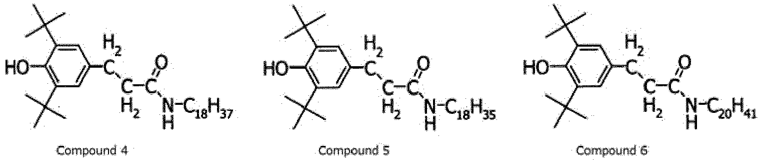

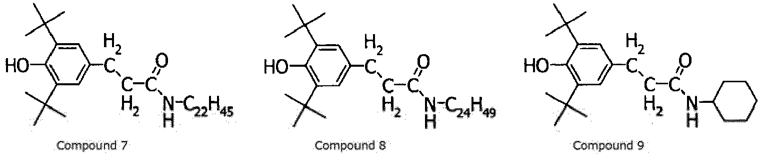

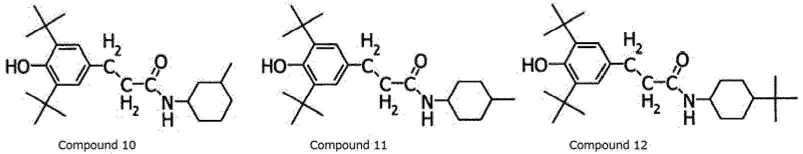

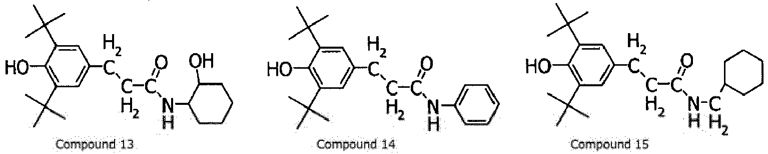

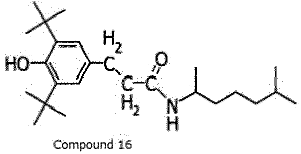

In the polymerization step, the phenolic antioxidant represented by the above-described Formula (2), which is masked with an organoaluminum compound, is added in an amount of 0.0001 to 0.3 parts by mass, preferably 0.001 to 0.2 parts by mass, with respect to 100 parts by mass of the polymer obtained in the polymerization step.

The method of adding the phenolic antioxidant represented by the above-described Formula (2) which is masked with an organoaluminum compound is not particularly restricted. Examples of suitable mode thereof include one in which the masked phenolic antioxidant is added and mixed in at least one of a catalyst feed tank, a polymerization apparatus and a production line.

The masking of the phenolic antioxidant can be performed by mixing and stirring an organoaluminum compound and the phenolic antioxidant in an inert solvent. By the mixing and stirring, hydrogen of the phenolic hydroxyl group of the phenolic antioxidant is substituted with the organoaluminum compound. The above-described phenolic antioxidant and organoaluminum compound may be mixed with stirring prior to being added to at least one of the catalyst system, the polymerization system and the piping. Alternatively, the phenolic antioxidant and organoaluminum compound may be added and mixed separately in at least one of the catalyst system, the polymerization system and the piping.

In cases where the compound produced as a by-product in the masking reaction of the phenolic antioxidant does not affect the polymerization reaction of the monomer or the resulting polymer, the masked phenolic antioxidant may be used as is; however, in cases where the by-product compound inhibits the polymerization, it is preferred to remove the compound by vacuum distillation or the like before adding the masked phenolic antioxidant to at least one of the catalyst system, the polymerization system and the piping.

It is desired that the above-described masked phenolic antioxidant be capable of yielding a phenol by undergoing a reaction with a hydrogen-donating compound such as water, an alcohol or an acid, which is added as an inactivation treatment of the polymerization catalyst after the polymerization.

Examples of the above-described organoaluminum compound include alkylaluminums and alkylaluminum hydrides, and the organic aluminum compound is preferably an alkylaluminum, particularly preferably a trialkylaluminum. Examples of the trialkylaluminum include trimethylaluminum, triethylaluminum, tri-n-propylaluminum, triisobutylaluminum, tri-n-hexylaluminum and tri-n-octylaluminum, and these compounds may be used individually or in combination in the form of a mixture. In addition, an aluminoxane obtained by a reaction between an alkylaluminum or an alkylaluminum hydride and water can also be used in the same manner. Examples of the inert solvent include aliphatic and aromatic hydrocarbon compounds. Examples of the aliphatic hydrocarbon compounds include saturated hydrocarbon compounds such as n-pentane, n-hexane, n-heptane, n-octane, isooctane and refined kerosene; and cyclic saturated hydrocarbon compounds such as cyclopentane, cyclohexane and cycloheptane. Examples of the aromatic hydrocarbon compounds include benzene, toluene, ethylbenzene, xylene and gasoline fractions. Among these compounds, n-hexane, n-heptane or a gasoline fraction (petroleum fraction) is preferably used. The concentration of the trialkylaluminum in the inert solvent is preferably 0.001 to 0.5 mol/L, particularly preferably 0.01 to 0.1 mol/L.

It is desired that the mixing ratio of the organoaluminum compound and the phenolic antioxidant represented by the above-described Formula (2) be, in terms of mass ratio, the organoaluminum compound/the phenolic antioxidant represented by the Formula (2) = 1/5 to 100/1. When the ratio of the organoaluminum compound is lower than 1/5, there is a problem that the excessive phenolic antioxidant adversely affects the catalyst activity, while when the ratio is higher than 100/1, the aluminum compound remains in the resulting polymer after polymerization, which may cause deterioration in the physical properties of the polymer or affect the ratio of the catalyst metal component, making it unable to perform the desired polymerization.

Examples of the phosphorus-based antioxidant to be used in the method of producing a polymer according to the present invention include triphenyl phosphite, diisooctyl phosphite, heptakis triphosphite, triisodecyl phosphite, diphenyl isooctyl phosphite, diisooctyl octylphenyl phosphite, heptakis(dipropylene glycol)triphosphite, triisodecyl phosphite, diphenylisooctyl phosphite, diisooctyloctylphenyl phosphite, diphenyltridecyl phosphite, triisooctyl phosphite, trilauryl phosphite, diphenyl phosphite, tris(dipropylene glycol)phosphite, diisodecyl pentaerythritol diphosphite, dioleyl hydrogen phosphite, trilauryl trithiophosphite, bis(tridecyl)phosphite, tris(isodecyl)phosphite, tris(tridecyl)phosphite, diphenyldecyl phosphite, dinonylphenyl-bis(nonylphenyl)phosphite, poly(dipropylene glycol)phenyl phosphite, tetraphenyldipropyl glycol diphosphite, trisnonylphenyl phosphite, tris(2,4-di-t-butylphenyl)phosphite, tris(2,4-di-t-butyl-5-methylphenyl)phosphite, tris[2-t-butyl-4-(3-t-butyl-4-hydroxy-5-methylphenylthio)-5-methylphenyl]phosphite, tridecyl phosphite, octyldiphenyl phosphite, di(decyl)monophenyl phosphite, distearyl pentaerythritol diphosphite, a mixture of distearyl pentaerythritol and calcium stearate, alkyl(C10) bisphenol A phosphite, di(tridecyl)pentaerythritol diphosphite, di(nonylphenyl)pentaerythritol diphosphite, bis(2,4-di-t-butylphenyl)pentaerythritol diphosphite, bis(2,6-di-t-butyl-4-methylphenyl)pentaerythritol diphosphite, bis(2,4,6-tri-t-butylphenyl)pentaerythritol diphosphite, bis(2,4-dicumylphenyl)pentaerythritol diphosphite, tetraphenyl-tetra(tridecyl)pentaerythritol tetraphosphite, bis(2,4-di-t-butyl-6-methylphenyl)ethyl phosphite, tetra(tridecyl)isopropylidene diphenol diphosphite, tetra(tridecyl)-4,4'-n-butylidenebis(2-t-butyl-5-methylphenol)diphosphite, hexa(tridecyl)-1,1,3-tris(2-methyl-4-hydroxy-5-t-butylphenyl)butane triphosphite, tetrakis(2,4-di-t-butylphenyl)biphenylene diphosphonite, 9,10-dihydro-9-oxa-10-phosphaphenanthrene-10-oxide, (1-methyl-1-propanyl-3-ylidene)tris(2-1,1-dimethylethyl)-5-methyl-4,1-phenylene)hexatridecyl phosphite, 2,2'-methylenebis(4,6-t-butylphenyl)-2-ethylhexyl phosphite, 2,2'-methylenebis(4,6-di-t-butylphenyl)-octadecyl phosphite, 2,2'-ethylidenebis(4,6-di-t-butylphenyl) fluorophosphite, 4,4'-butylidenebis(3-methyl-6-t-butylphenylditridecyl)phosphite, tris(2-[(2,4,8,10-tetrakis-t-butyldibenzo[d,f][1,3,2]dioxaphosphepin-6-yl)oxy]ethyl)amine, 3,9-bis(4-nonylphenoxy)-2,4,8,10-tetraoxa-3,9-diphosphaspiro[5,5]undecane, 2,4,6-tri-t-butylphenyl-2-butyl-2-ethyl-1,3-propanediol phosphite, poly-4,4'-isopropylidene diphenol C12-15 alcohol phosphite and phosphites of 2-ethyl-2-butylpropylene glycol and 2,4,6-tri-t-butylphenol.

The above-described phosphorus-based antioxidant is added in an amount of 0.0001 to 0.3 parts by mass, preferably 0.001 to 0.2 parts by mass, with respect to the polymer obtained in the polymerization step.

The phosphorus-based antioxidant added in the polymerization step may be the same or different from the one added in the melt-kneading step, and the above-described phosphorus-based antioxidants may be used individually, or a plurality thereof may be used in combination.

In cases where the above-described phosphorus-based antioxidant is added in the polymerization step, the phosphorus-based antioxidant is preferably mixed with the above-described inert solvent; however, the phosphorus-based antioxidant may also be mixed in advance with the inert solvent along with the phenolic antioxidant represented by the above-described Formula (2). Alternatively, the phosphorus-based antioxidant may be mixed with the inert solvent and added to the polymerization system, the catalyst system or the piping, separately from the phenolic antioxidant represented by the Formula (2).

In the polymerization step, the phenolic antioxidant represented by the above-described Formula (2), which is masked with an organoaluminum compound, and the phosphorus-based antioxidant are added in a total amount of preferably 0.001 to 0.5 parts by mass, more preferably 0.001 to 0.2 parts by mass, with respect to 100 parts by mass of the polymer obtained in the polymerization step.

Examples of the above-described monomer having an ethylenically unsaturated bond include ethylene, propylene, 1-butene, 1-hexene, 3-methyl-1-butene, 3-methyl-1-pentene, 4-methyl-1-pentene, vinylcycloalkane, styrene and derivatives of these monomers.

In the method of producing a polymer according to the present invention, the monomer having an ethylenically unsaturated bond to be used may either be a single type of monomer or a combination of two or more types of monomers, and it is preferably ethylene, propylene or a combination of α-olefin monomers. The monomer may also be, for example, ethylene by itself, propylene by itself, a combination of ethylene and propylene, a combination of ethylene, propylene and butene, or a combination of an α-olefin monomer and a non-conjugated diene monomer.

As the method of performing the polymerization reaction, any method which is conventionally used to perform a polymerization reaction of a monomer having an ethylenically unsaturated bond can be employed. For example, a method of performing polymerization in a liquid phase in the presence of a polymerization catalyst and an inert solvent such as an aliphatic hydrocarbon (e.g., butane, pentane, hexane, heptane or isooctane), an alicyclic hydrocarbon (e.g., cyclopentane, cyclohexane or methylcyclohexane), an aromatic hydrocarbon (e.g. toluene, xylene or ethylbenzene), a gasoline fraction or a hydrogenated diesel fraction; a polymerization method in which a liquefied monomer itself, which has an ethylenically unsaturated bond, is used as a medium, a method of performing polymerization in a gas phase where substantially no liquid phase is present; or a combination of two or more of these polymerization methods can also be employed. Further, the polymerization may be performed by either a batchwise process or a continuous process and it may also be performed by a single-step polymerization method or a multi-step polymerization method.

The polymerization catalyst is not particularly restricted and any known polymerization catalyst can be employed. Examples thereof include compounds of transition metals belonging to the groups 3 to 11 of the periodic table (such as titanium, zirconium, hafnium, vanadium, iron, nickel, lead, platinum, yttrium and samarium). Representative examples of the polymerization catalyst include Ziegler catalysts; Ziegler-Natta catalysts composed of a titanium-containing solid transition metal component and an organic metal component; Brookhart catalysts, which are compounds in which a hetero atom such nitrogen, oxygen, sulfur or phosphorus is bound to a transition metal belonging to the groups 4 to 10 of the periodic table; metallocene catalysts composed of a transition metal compound belonging to the group 4 to 6 of the periodic table, which has at least one cyclopentadienyl skeleton, and a co-catalyst component; and chrome-based catalysts; however, an electron-donating compound is preferably employed since a high-quality polymer can be obtained.

As a polymerization vessel to be used in the above-described polymerization reaction, a continuous reaction vessel installed in an existing polymerization equipment can be used as is. In the present invention, there is no particular restriction on the size, shape, material and the like of the existing polymerization equipment.

Further, an active hydrogen compound, a particulate carrier, an organoaluminum compound, an ion-exchanging layered compound, an inorganic silicate, an electron-donating compound and/or a catalyst component other than the above-described polymerization catalyst, such as a carrier, may also be used in such an amount which does not inhibit the polymerization.

Examples of the above-described electron-donating compound include ether-based compounds, ester-based compounds, ketone-based compounds and alkoxysilane-based compounds. These electron-donating compounds may be added individually, or a plurality thereof may be added as required.

Examples of the above-described ether-based compounds include diethyl ether, dipropyl ether, diisopropyl ether, di-n-butyl ether, diethylene glycol dimethyl ether, propylene glycol dimethyl ether, ethylene oxide, tetrahydrofuran, 2,2,5,5-tetramethyl tetrahydrofuran and dioxane.

Examples of the above-described ester-based compounds include methyl acetate, ethyl acetate, n-propyl acetate, isopropyl acetate, methyl propionate, ethyl propionate, n-propyl propionate, methyl methacrylate, ethyl methacrylate, n-propyl methacrylate, ethyl phenylacetate, methyl benzoate, ethyl benzoate, phenyl benzoate, methyl toluate, ethyl toluate, methyl anisate, ethyl anisate, methyl methoxybenzoate, ethyl methoxybenzoate, methyl methacrylate, ethyl methacrylate, dimethyl phthalate, diethyl phthalate, dipropyl phthalate, dibutyl phthalate, diisobutyl phthalate, dihexyl phthalate, γ-butyrolactone and ethyl cellosolve.

Examples of the above-described ketone-based compounds include acetone, diethyl ketone, methylethyl ketone and acetophenone.

Examples of the above-described alkoxysilane-based compounds include tetramethoxysilane, ethyltrimethoxysilane, propyltrimethoxysilane, isopropyltrimethoxysilane, t-butyltrimethoxysilane, i-butyltrimethoxysilane, phenyltrimethoxysilane, cyclohexyltrimethoxysilane, diethyldimethoxysilane, dipropyldimethoxysilane, diisopropyldimethoxysilane, diphenyldimethoxysilane, t-butylmethyldimethoxysilane, t-butylethyldimethoxysilane, t-butyl-n-propyldimethoxysilane, t-butylisopropyldimethoxysilane, cyclohexylmethyldimethoxysilane, tetraethoxysilane, ethyltriethoxysilane, propyltriethoxysilane, isopropyltriethoxysilane, t-butyltriethoxysilane, phenyltriethoxysilane, cyclohexyltriethoxysilane, diethyldiethoxysilane, dipropyldiethoxysilane, diisopropyldiethoxysilane, diphenyldiethoxysilane, t-butylmethyldiethoxysilane, cyclohexylmethyldiethoxysilane and dicyclopentyldimethoxysilane. Examples of the carrier are not restricted and examples thereof include inorganic carriers such as inorganic oxides and organic carriers such as porous polyolefins. A plurality of these carriers may also be used in combination.

Examples of the above-described inorganic carriers include silica, alumina, magnesium oxide, zirconium oxide, titanium oxide, iron oxide, calcium oxide and zinc oxide. In addition, examples of other inorganic carriers include magnesium halides such as magnesium chloride and magnesium bromide; and magnesium alkoxides such as magnesium ethoxide.

Further, examples of other inorganic carriers also include ion-exchanging layered compounds. The term "ion-exchanging layered compounds" refers to those compounds which have a crystalline structure in which the surfaces constituted by ionic bonds and the like are laminated in parallel with each other through week bonding force and contain exchangeable ions. Specific examples of such ion-exchanging layered compounds include kaolins, bentonites, talcs, kaolinites, vermiculites, montmorillonites, micas, α-Zr(HAsO₄)₂·H₂O, α-Zr(HPO₄)₂·H₂O, α-Sn(HPO₄)₂·H₂O and γ-Ti(NH4PO₄)₂·H₂O.

Examples of the above-described organic carriers include polyesters such as polyethylenes, polypropylenes, polystyrenes, ethylene-butene copolymers, ethylenepropylene copolymers, polymethacrylates, polyacrylates, polyacrylonitriles, polyamides, polycarbonates and polyethylene terephthalates; and polyvinyl chlorides. These organic carriers may also be cross-linked as in the case of, for example, a styrene-divinylbenzene copolymer. Further, a catalyst which is chemically bound onto these organic carriers can be used as well.

These carriers have a particle size in the range of generally 0.1 to 300 µm, preferably 1 to 200 µm, more preferably 10 to 100 µm. When the particle size is small, the resulting polymer is obtained in the form of fine powder, while when the particle size is excessively large, the handling of the resulting powder does not become easy due to, for example, generation of coarse particles.

These carriers have a pore volume of normally 0.1 to 5 cm²/g, preferably 0.3 to 3 cm²/g. The pore volume can be measured by, for example, a BET method or mercury porosimetry.

### [Melt-kneading Step]

The melt-kneading step is a step of, using an extruder or the like, melt-kneading and molding the polymer obtained in the above-described polymerization step with an addition of a total of 0.001 to 3 parts by mass, preferably 0.01 to 3 parts by mass of a phenolic antioxidant and a phosphorus-based antioxidant with respect to 100 parts by mass of the polymer.

The phenolic antioxidant is used in an amount of preferably 0.0005 to 1.5 parts by mass with respect to 100 parts by mass of the polymer obtained in the above-described polymerization step. Further, the phosphorus-based antioxidant is used in an amount of preferably 0.0005 to 1.5 parts by mass with respect to 100 parts by mass of the polymer.

The above-described phenolic antioxidant may be the same or different from the one represented by the Formula (2).

Examples of the above-described phenolic antioxidant include 2,6-di-t-butyl-4-ethylphenol, 2-t-butyl-4,6-dimethylphenol, styrenated phenol, 2,2'-methylenebis(4-ethyl-6-t-butylphenol), 2,2'-thiobis-(6-t-butyl-4-methylphenol), 2,2'-thiodiethylenebis[3-(3,5-di-t-butyl-4-hydroxyphenyl)propionate], 2-methyl-4,6-bis(octylsulfanylmethyl)phenol, 2,2'-isobutylidenebis(4,6-dimethylphenol), isooctyl-3-(3,5-di-t-butyl-4-hydroxyphenyl)propionate, N,N'-hexane-1,6-diylbis[3-(3,5-di-t-butyl-4-hydroxyphenyl)propionamide, 2,2'-oxamide-bis[ethyl-3-(3,5-di-t-butyl-4-hydroxyphenyl)propionate], 2-ethylhexyl-3-(3',5'-di-t-butyl-4'-hydroxyphenyl)propionate, 2,2'-ethylenebis(4,6-di-t-butylphenol), 3,5-bis(1,1-dimethylethyl)-4-hydroxy-benzenepropanoate, C13-15 alkyl esters, 2,5-di-t-amylhydroquinone, hindered phenol polymer (AO.OH998, manufactured by ADEKA Palmarole), 2,2'-methylenebis[6-(1-methylcyclohexyl)-p-cresol], 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 6-[3-(3-t-butyl-4-hydroxy-5-methyl)propoxy]-2,4,8,10-tetra-t-butylbenzo[d,f][1,3,2]-dioxaphosphepin, hexamethylenebis[3-(3,5-di-t-butyl-4-hydroxyphenyl)propionate, calcium bis[monoethyl(3,5-di-t-butyl-4-hydroxybenzyl)phosphonate, a reaction product between 5,7-bis(1,1-dimethylethyl)-3-hydroxy-2(3H)-benzofuranone and o-xylene, 2,6-di-t-butyl-4-(4,6-bis(octylthio)-1,3,5-triazine-2-ylamino)phenol, DL-a-tocophenol (vitamin E), 2,6-bis(α-methylbenzyl)-4-methylphenol, bis[3,3-bis-(4'-hydroxy-3'-t-butyl-phenyl)butyric acid]glycol ester, 2,6-di-t-butyl-p-cresol, 2,6-diphenyl-4-octadecyloxyphenol, stearyl(3,5-di-t-butyl-4-hydroxyphenyl)propionate, distearyl(3,5-di-t-butyl-4-hydroxybenzyl)phosphonate, tridecyl-3,5-di-t-butyl-4-hydroxybenzyl thioacetate, thiodiethylenebis[(3,5-di-t-butyl-4-hydroxyphenyl)propionate], 4,4'-thiobis(6-t-butyl-m-cresol), 2-octylthio-4,6-di(3,5-di-t-butyl-4-hydroxyphenoxy)-s-triazine, 2,2'-methylenebis(4-methyl-6-t-butylphenol), bis[3,3-bis(4-hydroxy-3-t-butylphenyl)butyric acid]glycol ester, 4,4'-butylidenebis(2,6-di-t-butylphenol), 4,4'-butylidenebis(6-t-butyl-3-methylphenol), 2,2'-ethylidenebis(4,6-di-t-butylphenol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl]terephthalate, 1,3,5-tris(2,6-dimethyl-3-hydroxy-4-t-butylbenzyl)isocyanurate, 1,3,5-tris(3,5-di-t-butyl-4-hydroxybenzyl)isocyanurate, 1,3,5-tris(3,5-di-t-butyl-4-hydroxybenzyl)-2,4,6-trimethylbenzene, 1,3,5-tris[(3,5-di-t-butyl-4-hydroxyphenyl)propionyloxyethyl]isocyanurate, tetrakis[methylene-3-(3',5'-di-t-butyl-4'-hydroxyphenyl)propionate]methane, 2-t-butyl-4-methyl-6-(2-acryloyloxy-3 -t-butyl-5 -methylbenzyl)phenol, 3,9-bis [2-(3 -t-butyl-4-hydroxy-5-methylhydrocinnamoyloxy)-1,1-dimethylethyl]-2,4,8,10-tetraoxaspiro[5.5]undecane, triethylene glycol-bis[β-(3-t-butyl-4-hydroxy-5-methylphenyl)propionate] and phenolic antioxidants represented by the above-described Formula (1). Thereamong, tetrakis[methylene-3-(3',5'-di-t-butyl-4'-hydroxyphenyl)propionate]methane is preferably used since it is relatively inexpensive and has good cost performance.

Examples of the above-described phosphorus-based antioxidant include the same ones as those exemplified in the above.

In the present invention, it is preferred that a thioether-based antioxidant be further added in the melt-kneading step since it largely improves the heat resistance of the resulting polymer. Examples of such thioether-based antioxidant include tetrakis[methylene-3-(laurylthio)propionate]methane, bis(methyl-4-[3-n-alkyl(C12/C14)thiopropionyloxy]5-t-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-t-butyl-m-cresol), 2,2'-thiobis(6-t-butyl-p-cresol) and distearyl-disulfide.

The thioether-based antioxidant is used in an amount of preferably 0.001 to 0.3 parts by mass, more preferably 0.01 to 0.3 parts by mass, with respect to 100 parts by mass of the polymer obtained in the above-described polymerization step.

In the polymer obtained in the above-described polymerization step, other additive(s) that are normally used in a polymer obtained from a monomer having an ethylenically unsaturated bond may also be blended as required. As a method of blending such other additives, the additives may be added at the time of polymerizing the monomer having an ethylenically unsaturated bond, as long as they do not inhibit the polymerization. Alternatively, for example, other additives may be mixed with the above-described polymer in an amount appropriate for the intended purpose and then the resulting mixture can be melt-kneaded, granulated and molded using a mold-processing machine such as an extruder.

Examples of such other additives include phosphorus-based antioxidants, ultraviolet absorbers, hindered amine compounds, heavy metal inactivators, nucleating agents, flame retardants, metallic soaps, hydrotalcites, fillers, lubricants, antistatic agents, pigments, dyes and plasticizers.

Examples of the above-described ultraviolet absorber include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolylphenol), polyethylene glycol ester of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole and 2-[2-hydroxy-4-(3-methacryloyloxypropyl)phenyl]benzotriazole; 2-(2-hydroxyphenyl)-4,6-diaryl-1,3,5-triazines such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C12 to C13 mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine and 2,4,6-tris(2-hydroxy-3-methyl-4-hexyloxyphenyl)-1,3,5-triazine; benzoates such as phenylsalicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy)benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate and behenyl(3,5-di-tert-butyl-4-hydroxy)benzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and a variety of metal salts or metal chelates, particular salts or chelates of nickel and chromium.

The above-described ultraviolet absorber is used in an amount of preferably 0.001 to 5 parts by mass, more preferably 0.005 to 0.5 parts by mass, with respect to 100 parts by mass of the polymer obtained in the above-described polymerization step.

Examples of the above-described hindered amine-based light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)-di(tridecyl)-1,2,3,4-butanetetracarboxylate, bis(1,2,2,6,6-pentamethyl-4-piperidyl)-di(tridecyl)-1,2,3,4-butanetetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-yl]aminoundecane, 1,6,11-tris[2,4-bis(N-butyl-N-(1,2,2,6,6-pentamethyl-4-piperidyl)amino)-s-triazine-6-yl]aminoundecane, bis {4-(1-octyloxy-2,2,6,6-tetramethyl)piperidyl}decanedionate, bis {4-(2,2,6,6-tetramethyl-1-undecyloxy)piperidyl}carbonate and TINUVIN NOR 371 manufactured by Ciba Specialty Chemicals K.K.

The above-described hindered amine-based light stabilizer is used in an amount of preferably 0.001 to 5 parts by mass, more preferably 0.005 to 0.5 parts by mass, with respect to 100 parts by mass of the polymer obtained in the above-described polymerization step.

Examples of the above-described heavy metal inactivator include salicylamide-1,2,4-triazol-3-yl, bis-salicylic acid hydrazide, dodecanedioyl bis(2-(2-hydroxybenzoyl)hydrazide) and bis(3-(3,5-di-t-butyl-4-hydroxyphenyl)propionic acid)hydrazide. The heavy metal inactivator is used in an amount of preferably 0.001 to 10 parts by mass, more preferably 0.05 to 5 parts by mass, with respect to 100 parts by mass of the polymer obtained in the above-described polymerization step.

Examples of the above-described nucleating agent include metal carboxylates such as sodium benzoate, aluminum 4-tert-butylbenzoate, sodium adipate and 2-sodium-bicyclo[2.2.1]heptane-2,3-dicarboxylate; metal phosphates such as sodium-bis(4-tert-butylphenyl)phosphate, sodium-2,2'-methylenebis(4,6-di-tert-butylphenyl)phosphate and lithium-2,2'-methylenebis(4,6-di-tert-butylphenyl)phosphate; polyhydric alcohol derivatives such as dibenzylidene sorbitol, bis(methylbenzylidene)sorbitol, bis(p-ethylbenzylidene)sorbitol and bis(dimethylbenzylidene)sorbitol; and amide compounds such as N,N',N"-tris[2-methylcyclohexyl]-1,2,3-propane tricarboxamide (RIKACLEAR PC1), N,N',N"-tricyclohexyl-1,3,5-benzene tricarboxamide, N,N'-dicyclohexyl-naphthalene dicarboxamide and 1,3,5-tri(dimethylisopropoylamino)benzene.

The above-described nucleating agent is used in an amount of 0.001 to 10 parts by mass, more preferably 0.005 to 5 parts by mass, with respect to 100 parts by mass of the polymer obtained in the above-described polymerization step.

Examples of the above-described flame retardant include aromatic phosphates such as triphenyl phosphate, tricresyl phosphate, trixylenyl phosphate, cresyldiphenyl phosphate, cresyl-2,6-xylenyl phosphate and resorcinol bis(diphenylphosphate); phosphates such as divinyl phenylphosphate, diallyl phenylphosphate and (1-butenyl)phenylphosphonate; phosphinates such as phenyl diphenylphosphinate, methyl diphenylphosphinate and 9,10-dihydro-9-oxa-10-phosphaphenanthlene-10-oxide derivatives; phosphazene compounds such as bis(2-allylphenoxy)phosphazene and dicresylphosphazene; phosphorus-based flame retardants such as melamine phosphate, melamine pyrophosphate, melamine polyphosphate, melamine polyphosphate, ammonium polyphosphate, phosphorus-containing vinylbenzyl compounds and red phosphorus; metal hydroxides such as magnesium hydroxide and aluminum hydroxide; and bromine-based flame retardants such as brominated bisphenol A-type epoxy resin, brominated phenol novolac-type epoxy resin, hexabromobenzene, pentabromotoluene, ethylenebis(pentabromophenyl), ethylenebis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromo bisphenol A-type dimethacrylate, pentabromobenzyl acrylate and brominated styrene.t

The above-described flame retardant is used in an amount of preferably 1 to 70 parts by mass, more preferably 10 to 30 parts by mass, with respect to 100 parts by mass of the polymer obtained in the above-described polymerization step.

Examples of the above-described filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, mica, silica, alumina, potassium titanate whiskers, wollastonite and fibrous magnesium oxysulfate. Thereamong, a filler having an average particle size (in the case of a spherical or flat filler) or an average fiber diameter (in the case of a needle-form or fibrous filler) of 5 µm or less is preferred. The above-described filler may be appropriately used in such an amount which does not deteriorate the effects of the present invention.

The above-described lubricant is added for the purpose of imparting the surface of the resulting molded article with lubricity and improving the damage-preventing effect. Examples of such lubricant include unsaturated fatty acid amides such as oleic acid amide and erucic acid amide; and saturated fatty acid amides such as behenic acid amide and stearic acid amide. These lubricants may be used individually, or two or more thereof may be used in combination.

The above-described lubricant is added in an amount of 0.03 to 2 parts by mass, more preferably 0.04 to 1 part by mass, with respect to 100 parts by mass of the polymer obtained in the above-described polymerization step. When the amount is less than 0.03 parts by mass, the desired lubricity may not be attained, while when the amount is greater than 2 parts by mass, the lubricant component may bleed out to the surface of the resulting molded article of the polymer and/or cause deterioration in the physical properties thereof.

The above-described antistatic agent is added for the purpose of reducing the electrostatic property of the resulting molded article and preventing adhesion of dusts caused by electrostatic charge. Examples of such antistatic agent include cationic, anionic and non-ionic antistatic agents. Preferred examples thereof include polyoxyethylene alkylamines, polyoxyethylene alkyl amides, fatty acid esters thereof and glycerin fatty acid esters. These antistatic agents may be used individually, or two or more thereof may be used in combination. Further, the antistatic agent is added in an amount of preferably 0.03 to 2 parts by mass, more preferably 0.04 to 1 part by mass, with respect to 100 parts by mass of the polymer obtained in the above-described polymerization step. When the amount of the antistatic agent is excessively small, the antistatic effect is insufficient, while when the amount is excessively large, the antistatic agent may bleed out to the surface and/or cause deterioration in the physical properties of the polymer.

The use of the polymer obtained by the present invention is not particularly restricted, and the polymer may be made into a film, a sheet or a molded article by a known extrusion molding, injection molding, hollow molding or blowing to be used in automobile components, home electric appliances, building materials, agricultural materials, packaging materials, miscellaneous goods, toys and the like.

### EXAMPLES

### <Examples 1 and 2, Comparative Examples 1 to 4> (not part of the present invention)

The present invention will now be described in more detail by way of examples and comparative examples thereof; however, the present invention is not restricted thereto by any means. It is noted here that, in Examples and Comparative Examples, the respective physical properties were measured by the following methods.

### (Elution Test)

A nonwoven fabric obtained by the below-described method was cut out in a weight of 10 g and placed in a stainless-steel container. Then, 100 ml of ethanol was added and the container was sealed and left to stand for 6 hours in a 70°C oven. After 6 hours, the stainless-steel container was taken out from the oven and allowed to cool to room temperature. Thereafter, the additives and resin extracted in ethanol were quantitatively analyzed by the following method.

### (Quantitative Analysis)

Using gas chromatography [apparatus: Gas Chromatography GC2010, manufactured by Shimadzu Corporation, column: BPX5 manufactured by SGE Analytical Science Pty Ltd. (30 m × 0.25 mmID × 0.25 µm), injection temperature: 330°C, detector temperature: 330°C, measurement condition: heating rate = 15°C/min], the respective blended additives were dissolved in chloroform and a calibration curve was prepared to quantitatively analyze each additive extracted in ethanol. As for the quantification of the eluted resin, the amount of the eluted resin (mg) was determined by subtracting the amount of the eluted additives from the total elution amount.

### (Tensile Strength)

In accordance with JIS L1906 (Test methods for non-woven fabrics made of filament yarn), the tensile strength was measured in the longitudinal direction (machine direction). A rectangle of 5 cm × 30 cm was cut out from a sheet-form nonwoven fabric to prepare a test sample and the thus obtained test piece was stretched at a chuck distance of 20 cm and a tensile rate of 10 cm/min to determine the tensile strength in terms of the load at which the test piece was broken.

### (Thread Breakage during Spinning)

At the time of spinning, the vicinity of the spinning nozzle was illuminated with light from behind to visually observe the thread breakage condition (presence or absence of thread breakage).

### (Sheet Pin Hole)

The nonwoven fabric was illuminated from behind with uniform light of a fluorescent lamp to observe the presence or absence of pin hole.

### (Yellowness of Nonwoven Fabric; Y.I.)

In accordance with JIS K7105, the yellowness (Y.I.) of the nonwoven fabric was measured using a spectrocolorimeter (SC-P; manufactured by Suga Test Instruments Co., Ltd.).

### [Examples 1 and 2, Comparative Example 1]

### (Masking of Phenolic Antioxidant)

To 50 ml of toluene, a total of 5.0 g of triisobutylaluminum and the stabilizers (phenolic antioxidants) shown in Table 1 below were added such that the molar ratio of the functional groups became 2:1. The resultant was then stirred at room temperature for 30 minutes to obtain a stabilizer solution inactivated to polymerization catalysts.

### (Polymerization)

To a 1,000-ml autoclave whose atmosphere had been replaced with nitrogen, 300 ml of toluene was loaded. Then, 2 ml of a toluene solution in which methylaluminoxane (MMAO-3A manufactured by Tosoh Finechem Corporation: 9 mmol in terms of aluminum) and 1.28 mg of
ethylenebis(tetrahydroindenyl)zirconium dichloride were dissolved and the stabilizer solution shown in Table 1 were sequentially added. The atmosphere inside the autoclave was replaced with propylene and the system was pressurized with propylene at 6 kgf/ cm²G to perform polymerization reaction at 50°C for 1 hour. After quenching the polymerization reaction by adding 10 ml of ethanol to the reaction solution, the solvent was removed under reduced pressure and subsequently, the resulting polymer was dried in vacuum at 60°C over a period of a day and a night to obtain a polypropylene powder.

### (Production of Nonwoven Fabric)

To 100 parts by mass of the thus obtained polypropylene powder, 0.05 parts by mass of calcium stearate was added and mixed. Then, the resulting mixture was kneaded using a uniaxial extruder (apparatus: Labo-Plastomill Micro, manufactured by Toyo Seiki Seisaku-sho, Ltd.; extrusion temperature: 250°C; screw rotation speed: 50 rpm) and spun by a melt-blown method using a spinning machine (nozzle: 0.45 mmΦ, 30-hole nozzle; discharge rate: 1.0 g/min; air supply pressure: 0.7 kg/cm²) to produce a nonwoven fabric having a basis weight of 30 g/m².

### [Comparative Examples 2 to 4]

A polypropylene powder was obtained in the same manner as in the above-described Example 1, except that the stabilizer solution was added at the time of granulation, not at the time of polymerization.

**[Table 1]**

| | Stabilizer | Added amount [parts by mass] | Method of addition | Amount ratio of eluted additives⁶⁾ | Amount of eluted resin [mg] | Tensile strength [kg/cm²] | Thread breakage during spinning | Sheet pin hole | Yellowness of nonwoven fabric |
|---|---|---|---|---|---|---|---|---|---|
| Example 1 | AO-1¹⁾ | 0.0050 | at the time of polymerization⁴⁾ | 0.2 | <1 | 1.5 | no | no | 1.6 |
| | P-1³⁾ | 0.0150 | | | | | | | |
| Example 2 | AO-1¹⁾ | 0.030 | at the time of polymerization⁴⁾ | 0.6 | <1 | 1.5 | no | no | 2.3 |
| | P-1³⁾ | 0.040 | | | | | | | |
| Comparative Example 1 | AO-1¹⁾ | 0.050 | at the time of polymerization⁴⁾ | 1.0 | <1 | 1.6 | no | no | 2.9 |
| | P-1³⁾ | 0.050 | | | | | | | |
| Comparative Example 2 | AO-2²⁾ | 0.050 | at the time of granulation⁵⁾ | 1.0 | <1 | 1.6 | no | no | 2.2 |
| | P-1 | 0.050 | | | | | | | |
| Comparative Example 3 | AO-1 | 0.0050 | at the time of granulation⁵⁾ | 0.2 | 14 | 0.8 | yes | yes | 2.7 |
| | P-1 | 0.0150 | | | | | | | |
| Comparative Example 4 | AO-2 | 0.0050 | at the time of granulation⁵⁾ | 0.2 | 16 | 0.7 | yes | yes | 3.0 |
| | P-1 | 0.0150 | | | | | | | |

| | | | | | | | | | |
|---|---|---|---|---|---|---|---|---|---|
| ¹⁾ AO-1: 3-(3,5-di-tert-butyl-4-hydroxyphenyl)-N-octadecyl propionamide ²⁾ AO-2: tetrakis[methylene-3-(3,5-di-t-butyl-4-hydroxyphenyl)propionate]methane ³⁾ P-1: tris(2,4-di-t-butylphenyl)phosphite ⁴⁾ at the time of polymerization: the stabilizers were added at the time of polymerizing the olefin-based monomer. ⁵⁾ at the time of granulation: after the polymerization of the olefin-based monomer, the stabilizers were added and mixed and the resultant was granulated by kneading at 250°C. ⁶⁾ The amount ratio of eluted additives represents the ratio of the amount of the eluted additives in the respective composition when the amount of the eluted antioxidant in Comparative Example 1 is taken to be 1. | | | | | | | | | |

According to the results of the above-described Comparative Examples 1 and 2, stabilized nonwoven fabrics showing no thread breakage and sheet pin hole were produced from the respective polymers containing a total of 0.1 parts by mass of stabilizers; however, when the nonwoven fabrics were exposed to ethanol, additives were eluted. Further, with 0.1 parts by mass of the stabilizers, there was observed no difference between the method in which the stabilizers were added at the time of polymerization and the method in which the stabilizers were added at the time of granulation. Moreover, according to the results of Comparative Examples 3 and 4, when the total amount of the stabilizers was reduced from 0.1 parts by mass to 0.02 parts by mass, although the elution of additives by ethanol was suppressed, the stabilization effect was impaired, so that thread breakage and generation of sheet pin holes occurred frequently, making it difficult to stably produce a nonwoven fabric. In addition, it was confirmed by the elution test that the resin was eluted in a large amount and that, therefore, these nonwoven fabrics have a major problem from the hygienic standpoint.

In contrast, the nonwoven fabrics of Examples 1 and 2 that were produced in accordance with the present invention showed no elution of the stabilizers and resin even when they were exposed to a solvent. Furthermore, no thread breakage occurred during spinning and no sheet pin hole was generated; therefore, a nonwoven fabric was produced stably. Accordingly, since the nonwoven fabric obtained by the present invention has excellent properties from the hygienic standpoint, it can be suitably used as a filtration filter and the like.

### <Examples 3 and 4, Comparative Examples 5 to 9> (Not part of the present invention)

The present invention will now be described in more detail by way of Production Examples A to C, Examples and Comparative Examples; however, the present invention is not restricted thereto by any means. It is noted here that Production Examples represent methods of polymerizing a thermoplastic elastomer, while Examples and Comparative Examples show evaluations of the thus produced thermoplastic elastomers.

### [Production Example A]

### (Preparation of Catalyst)

In 100 mL of toluene, 37.5 g (0.15 mol) of fine powdery CuSO₄·5H₂O was suspended and a mixed solution composed of 50 mL (0.52 mol) of trimethylaluminum and 150 mL of toluene was slowly added thereto dropwise at 20°C with stirring. After completion of the dropwise addition, the resultant was allowed to react at 20°C for another 48 hours. Then, after filtering the reaction solution to remove solid copper sulfate, toluene and unreacted trimethylaluminum were removed by vacuum distillation at a pressure of 2 mmHg and a temperature of 35°C, thereby obtaining methylaluminoxane in an amount of 17 g (0.29 mol).

To 2 L of hot water at about 95°C, 500 g of a high-purity γ-alumina (ACP-1, manufactured by Shokubai Kasei Co.; average particle size: about 60 µm; specific surface area: about 300 m²/g; pore volume: about 0.7 mL/g) was added and the resultant was stirred for 3 hours, followed by removal of the water. After repeating these operations 10 more times, the resultant was washed with acetone and then dried. The thus dried alumina was heated at 450°C for 6 hours under dry nitrogen gas flow to remove the adsorbed water.

This alumina in an amount of 7 g was suspended in 50 mL of n-hexane and 82 mg (1.4 mmol in terms of aluminum unit) of methylaluminoxane dissolved in 10 mL of toluene was added to the resulting suspension. After stirring the thus obtained mixture at room temperature for 30 minutes, 9 mL of 0.16M solution of tetrabenzylzirconium dissolved in toluene was added, and the resultant was stirred at room temperature for another 30 minutes. Neither zirconium nor aluminum was detected in the liquid phase.

As a result of calculation base on the amount of the adsorbed aluminum, the solid catalyst prepared in this manner was found to contain 0.2 mmol/g of zirconium and 0.2 mmol/g of aluminum.

### (Preparation of Stabilizer Solution)

To 50 ml of toluene, a total of 5.0 g of triisobutylaluminum and the stabilizer(s) (phenolic antioxidant(s)) shown in Table 2 below was added such that the molar ratio of the functional groups became 2:1. The resultant was then stirred at room temperature for 30 minutes to prepare a stabilizer solution.

### (Polymerization)

To a 100-L stainless-steel autoclave, hydrogen and ethylene were charged under a nitrogen atmosphere such that the hydrogen partial pressure and the ethylene partial pressure became 0.6 kg/cm² and 3 kg/cm², respectively, at 25°C, and 25 kg of propylene was further charged thereto. The temperature of the autoclave was raised to 50°C and, using a pressure equalizer, a catalyst slurry was added to a zirconium amount of 3 mmol. Then, after adding the stabilizer solution prepared in the above such that the amount of the added stabilizer(s) in the resulting polymer became as shown in Table 2, ethylene was fed to perform copolymerization for 2 hours while maintaining a temperature of 60°C and a total pressure of 29 kg/cm². Thereafter, the polymerization reaction was quenched by an addition of 50 mL of isopropyl alcohol. Unreacted propylene was removed and the polymerization product was recovered to obtain a white spherical thermoplastic elastomer.

### [Production Example B]

A thermoplastic elastomer was obtained by performing polymerization in the same manner as in Production Example A, except that, in the preparation of stabilizer solution, the stabilizer was changed as shown in Table 2.

### [Production Example C]

A thermoplastic elastomer was obtained by performing polymerization in the same manner as in Production Example A, except that no stabilizer solution was added.

### (Evaluation of Effects on Polymerization Behavior)

For the thus obtained thermoplastic elastomers, the effects on the polymerization behavior were evaluated based on the molecular weight of the respective thermoplastic elastomers. The catalytic activity (kg-PP/mol-Zr-hr) represents the amount of polymerization per 1 hour with respect to a catalyst amount corresponding to 1 mol of zirconium. As for the molecular weight, the weight-average molecular weight and the degree of dispersion (Mw/Mn) were measured by gel permeation chromatography (apparatus: Model GPC2000, manufactured by Waters Corporation; columns: two Styragel HT6E columns and one Styragel HT2 column, which are manufactured by Waters Corporation; measuring temperature: 135°C; solvent: o-dichlorobenzene; concentration: 6 mg/10 g). The results thereof are shown in Table 2 below.

### (Ethylene Content (% by mass))

The thermoplastic elastomers obtained in the above were each sandwiched by aluminum plates (0.4 mm in thickness) covered with aluminum foil and heat-pressed at 180°C to prepare a 0.1 mm-thick film. For each of the thus obtained films, the absorbance at 733 cm⁻¹ was measured using an infrared spectrophotometer (FT-IR, manufactured by Shimadzu Corporation) and the ethylene content (% by mass) was calculated based on a calibration curve prepared in advance by ¹³C-NMR assay. The results thereof are shown in Table 2 below.

**[Table 2]**

| Production Example | Stabilizer | Added amount (ppm) | Catalytic activity (kg-PP/mol-Zr·hr) | Mw | Mw/Mn | Ethylene content [%] |
|---|---|---|---|---|---|---|
| A | AO-1²⁾ | 100 | 43,000 | 479,000 | 2.0 | 52 |
| B | AO-1²⁾ P-1³⁾ | 50 100 | 43,000 | 480,000 | 2.0 | 52 |
| C | Control¹⁾ | 0 | 43,000 | 479,000 | 2.0 | 52 |

| | | | | | | |
|---|---|---|---|---|---|---|
| ¹⁾ Control: no phenolic antioxidant was added. ²⁾ AO-1: 3-(3,5-di-tert-butyl-4-hydroxyphenyl)-N-octadecyl propionamide ³⁾ P-1: tris(2,4-di-tert-butylphenyl)phosphite | | | | | | |

From the results of Production Examples A and B shown in Table 2, it was confirmed that the addition of the masked phenolic antioxidant did not affect the polymerization behavior of the thermoplastic elastomers.

### [Examples 3 and 4]

To 100 parts by mass of the thermoplastic elastomer obtained in Production Example A or B shown in Table 2, 0.05 parts by mass of calcium stearate was added. The resultant was thoroughly mixed and then granulated using a biaxial extruder (Plastomill Micro, manufactured by Toyo Seiki Seisaku-sho, Ltd.; extrusion temperature: 180°C; screw rotation speed: 50 rpm) to obtain a pellet.

### [Comparative Examples 5 to 9]

To 100 parts by mass of the thermoplastic elastomer obtained in the above-described Production Example C, the stabilizer shown in Table 3 and 0.05 parts by mass of calcium stearate were added and mixed. The resulting mixture was then granulated using a biaxial extruder (Plastomill Micro, manufactured by Toyo Seiki Seisaku-sho, Ltd.; extrusion temperature: 180°C; screw rotation speed: 50 rpm) to obtain a pellet.

In order to verify the stabilization effect of the respective pellets obtained in the above, each pellet was loaded to a biaxial extruder (Plastomill Micro, manufactured by Toyo Seiki Seisaku-sho, Ltd.; extrusion temperature: 230°C; screw rotation speed: 50 rpm) and kneaded. The pellet was sampled at 2-minute intervals and, for every sample that were collected, the weight-average molecular weight was measured by gel permeation chromatography (apparatus: Model GPC2000, manufactured by Waters Corporation; columns: two Styragel HT6E columns and one Styragel HT2 column, which are manufactured by Waters Corporation; measuring temperature: 135°C; solvent: o-dichlorobenzene; concentration: 6 mg/10 g). The results thereof are shown in Table 3 below.

### (Y.I.)

The pellets obtained in the above were each heat-pressed at 180°C to prepare a 2 mm-thick sheet. Using a spectrocolorimeter (SC-T; manufactured by Suga Test Instruments Co., Ltd.), the yellowness of the thus prepared sheet was measured. The results thereof are shown in Table 3 below.

### (Fogging Resistance)

For each of the pellets obtained in the above, the cloudiness of a glass plate subjected to a fogging test in accordance with ISO 6452 was visually observed. When the glass plate was observed with no cloudiness, the fogging resistance was evaluated as "○" (present), while when the glass plate was observed with some cloudiness, the fogging resistance was evaluated as "×" (absent). The results of the evaluations are shown in Table 3 below.

### (Number of Gels)

The pellets obtained in the above were each sandwiched by aluminum plates (0.4 mm in thickness) covered with aluminum foil and heat-pressed at 180°C to prepare a 0.1 mm-thick film. On the thus prepared film, 10 measurement points were randomly selected, and the number of gels per 1 cm² at each measurement point was counted using a loupe and an average thereof was calculated. The results thereof are shown in Table 3 below.

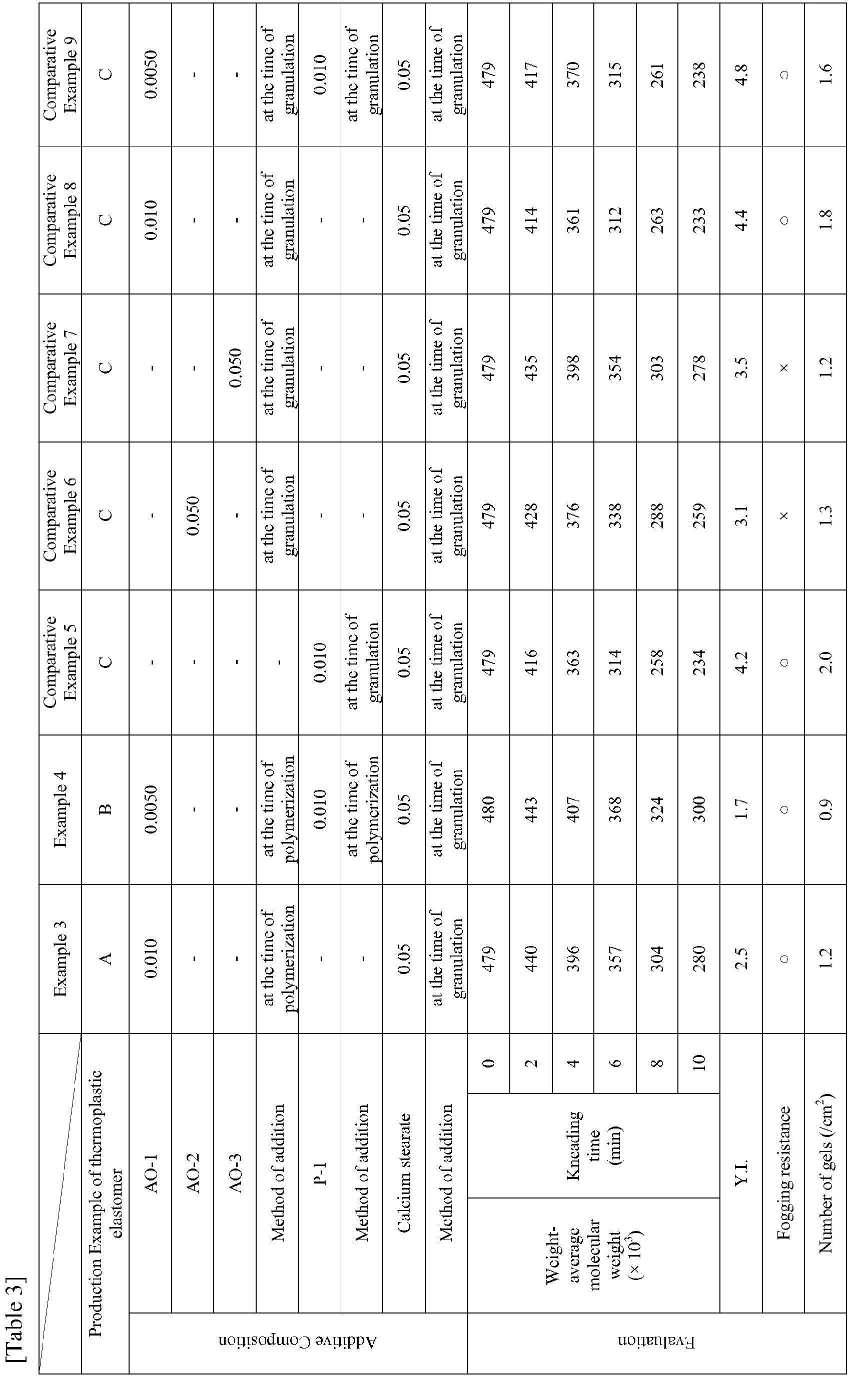

AO-1: 3,5-di-tert-butyl-4-hydroxyphenyl)-N-octadecyl propionamide
AO-2: n-octadecyl-3-(3,5-di-t-butyl-4-hydroxyphenyl)propionate
AO-3: tetrakis[methylene-3-(3,5-di-t-butyl-4-hydroxyphenyl)propionate]methane
P-1: tris(2,4-di-tert-butylphenyl)phosphite

From the results of Comparative Examples 6 and 7, it was found that fogging occurred and the thermoplastic elastomers were colored when a phenolic antioxidant different from the one represented by the above-described Formula (1) according to the present invention was added.

In addition, from the results of Comparative Examples 8 and 9, it was found that the thermoplastic elastomers were colored when the phenolic antioxidant according to the present invention represented by the above-described Formula (1) was added at the time of granulation.

Moreover, from the results of Comparative Example 5, it was found that the heat stabilization effect became poor and the thermoplastic elastomer was markedly colored when the phenolic antioxidant according to the present invention represented by the Formula (1) was not used and only a phosphorus-based antioxidant was added at the time of granulation.

In contrast, according to the results of Examples 3, by adding the phenolic antioxidant according to the present invention represented by the above-described Formula (1) at the time of polymerization, a thermoplastic elastomer showing good stabilization effect and excellent fogging resistance, in which coloration and gel generation are inhibited, was obtained. Furthermore, from the results of Example 4, it was confirmed that, by using a phosphorus-based antioxidant in combination, the resulting thermoplastic elastomer attained better stabilization effect and inhibition of coloration and gel generation.

### <Examples 5-1 to 26-1, Comparative Examples 10-1 to 31-12>

### (Preparation of Solid Ti Catalyst Component)

After allowing 4.76 g (50 mmol) of anhydrous magnesium chloride, 25 ml of decane and 23.4 ml (150 mmol) of 2-ethylhexyl alcohol to react with heating at 130°C for 2 hours to obtain a uniform solution, 1.11 g (7.5 mmol) of phthalic anhydride was added thereto and the resulting solution was allowed to react at 130°C for another 1 hour to dissolve the phthalic anhydride in the uniform solution. The thus obtained uniform solution was cooled to room temperature and the whole amount thereof was then added dropwise over a period of 1 hour to 200 ml (1.8 mol) of titanium tetrachloride maintained at -20°C. After the completion of the addition, the temperature of the resulting mixed solution was raised to 110°C over a period of 4 hours. Once the temperature reached 110°C, 2.68 ml (12.5 mmol) of diisobutyl phthalate was added and the resulting mixture was maintained at this temperature for 2 hours under stirring. After the completion of the 2-hour reaction, the resulting solids were collected by hot filtration and resuspended in 200 ml of titanium tetrachloride. Then, the resulting suspension was once again allowed to react with heating at 110°C for 2 hours. After the completion of the reaction, the resulting solids were collected again by heat filtration and thoroughly washed with 110°C decane and hexane until no free titanium compound was detected in the washings, thereby obtaining a solid Ti catalyst component. The solid Ti catalyst component synthesized by the above-described production method was stored in the form of a heptane slurry and a portion thereof was taken out and dried to examine the catalyst composition. In this manner, the composition of the solid Ti catalyst component was determined to be: 3.1% by weight of titanium, 56.0% by weight of chlorine, 17.0% by weight of magnesium and 20.9% by weight of isobutyl phthalate.

### (Preparation of Phenoxide Solution)

In a flask whose atmosphere had been replaced with nitrogen, 10 ml of heptane, 54 mg of triethylaluminum and 161 mg of the respective phenolic antioxidants shown in Tables 4 to 25 were mixed with stirring to mask the phenolic antioxidant, thereby preparing a phenoxide solution having a phenolic antioxidant concentration of 16 mg/mL.

### (Preparation of Phosphite Solution)

In a flask whose atmosphere had been replaced with nitrogen, 144 mg of the respective phosphorus-based antioxidants shown in Tables 4 to 25 and 6 mL of heptane were mixed with stirring to prepare a phosphite solution having a phosphorus-based antioxidant concentration of 24 mg/mL.

### (Addition, Polymerization)

To an autoclave whose atmosphere had been replaced with nitrogen, 600 mL of heptane, 303 mg of triethylaluminum, the thus obtained phenoxide solution and phosphite solution were added in such a manner to attain the respective formulations of stabilizer composition shown in Tables 4 to 25. To the resulting stabilizer composition, 0.26 mmol of dicyclopentyldimethoxysilane and the solid Ti catalyst component in the form of a heptane slurry (13 µmol in terms of Ti) were sequentially added. Then, the atmosphere inside the autoclave was replaced with propylene and the system was pressurized with propylene at 1 kgf/ cm²G to perform prepolymerization at 50°C for 5 minutes. After purging propylene, 340 ml of hydrogen (23°C) was blown into the autoclave and the temperature thereof was raised to 70°C. Thereafter, the atmosphere inside the autoclave was pressurized with propylene at 6 kgf/ cm²G to perform polymerization reaction at 70°C for 1 hour. After replacing the system with nitrogen gas and quenching the polymerization reaction by an addition of 5 mL of ethanol at 40°C, the solvent was removed under reduced pressure at 50°C and subsequently, the resulting polymer was dried in vacuum at 40°C for 5 hours to obtain a polypropylene powder.

### (Melt-kneading, Granulation)

To 100 parts by mass of the thus obtained polypropylene powder, the respective stabilizer compositions shown in Tables 4 to 25 and 0.05 parts by mass of calcium stearate were added and mixed. Then, the resulting mixture was melt-kneaded using a biaxial extruder (Labo-Plastomill Micro, manufactured by Toyo Seiki Seisaku-sho, Ltd.) at a melting temperature of 230°C and a screw speed of 50 rpm to obtain a pellet.

### (Processing Method)

The pellets obtained by the above-described method of Examples and Comparative Examples were each injection-molded using a laboratory micro injection molding machine (manufactured by DSM Xplore; Compounder 15, Injection molder 12) at an injection temperature of 230°C and a die temperature of 40°C, thereby preparing a test piece of 60 mm × 36 mm × 2 mm. After the injection molding, the thus obtained test piece was left to stand for 48 hours in a 23°C incubator and then subjected to the following measurements. The results of the measurements are shown in Tables 4 to 25 below. It is noted here that, in Tables 4 to 25, AO-1 to AO-8, P-1 to P-6 and S-1 to S-5 each represent a common compound. (1) Initial Y.I.

In accordance with JIS K7105, using a spectrocolorimeter (SC-P; manufactured by Suga Test Instruments Co., Ltd.), the yellowness (Y.I.) of each test piece was measured before placing it in an oven.

### (2) Crack Generation Time

The test piece was placed in a 150°C oven and the time required for a crack to be generated was measured.

**[Table 4]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 5-1 | AO-1 P-1 | 0.005 0.015 | AO-2 P-1 | 0.070 0.050 | 0.14 | 2.7 | 1248 |
| Comparative Example 10-1 | AO-1 P-1 | 0.005 0.015 | - | - | 0.020 | 2.1 | 24 |
| Comparative Example 10-2 | AO-1 AO-2 P-1 | 0.005 0.070 0.065 | - | - | 0.14 | 3.4 | 576 |
| Comparative Example 10-3 | AO-1 P-1 | 0.075 0.065 | - | - | 0.14 | 3.5 | 168 |
| Comparative Example 10-4 | AO-2 P-1 | 0.075 0.065 | - | - | 0.14 | 3.5 | 576 |
| Comparative Example 10-5 | - | - | AO-1 P-1 | 0.075 0.065 | 0.14 | 3.2 | 168 |
| Comparative Example 10-6 | - | - | AO-2 P-1 | 0.075 0.065 | 0.14 | 3.2 | 888 |
| Comparative Example 10-7 | - | - | AO-1 AO-2 P-1 | 0.005 0.070 0.065 | 0.14 | 3.1 | 816 |
| Comparative Example 10-8 | - | - | AO-2 P-1 | 0.100 0.100 | 0.20 | 3.5 | 1272 |

| | | | | | | | |
|---|---|---|---|---|---|---|---|
| AO-1: 3-(3,5-di-t-butyl-4-hydroxyphenyl)-N-octadecyl propionamide AO-2: tetrakis[methylene-3-(3,5-di-t-butyl-4-hydroxyphenyl)propionate]methane P-1: tris(2,4-di-t-butylphenyl)phosphite | | | | | | | |

**[Table 5]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 6-1 | AO-1 P-1 | 0.005 0.015 | AO-3 P-1 | 0.070 0.050 | 0.14 | 2.8 | 76 |
| Comparative Example 11-1 | AO-1 AO-3 P-1 | 0.005 0.070 0.065 | - | - | 0.14 | 3.5 | 72 |
| Comparative Example 11-2 | AO-3 P-1 | 0.075 0.065 | - | - | 0.14 | 3.6 | 52 |
| Comparative Example 11-3 | - | - | AO-3 P-1 | 0.075 0.065 | 0.14 | 3.3 | 54 |
| Comparative Example 11-4 | - | - | AO-1 AO-3 P-1 | 0.005 0.070 0.065 | 0.14 | 3.2 | 60 |
| Comparative Example 11-5 | - | - | AO-3 P-1 | 0.100 0.100 | 0.20 | 3.5 | 76 |

| | | | | | | | |
|---|---|---|---|---|---|---|---|
| AO-3: 2,6-di-t-butyl-4-methylphenol | | | | | | | |

**[Table 6]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 7-1 | AO-1 P-1 | 0.005 0.015 | AO-4 P-1 | 0.070 0.050 | 0.14 | 2.3 | 192 |
| Comparative Example 12-1 | AO-1 AO-4 P-1 | 0.005 0.070 0.065 | - | - | 0.14 | 2.9 | 96 |
| Comparative Example 12-2 | AO-4 P-1 | 0.075 0.065 | - | - | 0.14 | 2.9 | 72 |
| Comparative Example 12-3 | - | - | AO-4 P-1 | 0.075 0.065 | 0.14 | 2.7 | 144 |
| Comparative Example 12-4 | - | - | AO-1 AO-4 P-1 | 0.005 0.070 0.065 | 0.14 | 2.7 | 144 |
| Comparative Example 12-5 | - | - | AO-4 P-1 | 0.100 0.100 | 0.20 | 3.1 | 192 |

| | | | | | | | |
|---|---|---|---|---|---|---|---|
| AO-4: n-octadecyl-3-(3',5'-di-t-butyl-4'-hydroxyphenyl)propionate | | | | | | | |

**[Table 7]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 8-1 | AO-1 P-1 | 0.005 0.015 | AO-5 P-1 | 0.070 0.050 | 0.14 | 2.5 | 96 |
| Comparative Example 13-1 | AO-1 AO-5 P-1 | 0.005 0.070 0.065 | - | - | 0.14 | 3.1 | 72 |
| Comparative Example 13-2 | AO-5 P-1 | 0.075 0.065 | - | - | 0.14 | 3.1 | 58 |
| Comparative Example 13-3 | - | - | AO-5 P-1 | 0.075 0.065 | 0.14 | 2.8 | 66 |
| Comparative Example 13-4 | - | - | AO-1 AO-5 P-1 | 0.005 0.070 0.065 | 0.14 | 2.7 | 78 |
| Comparative Example 13-5 | - | | AO-5 P-1 | 0.100 0.100 | 0.20 | 3.2 | 96 |

| | | | | | | | |
|---|---|---|---|---|---|---|---|
| AO-5: 1,1,3-tris(2-methyl-4-hydroxy-5-t-butylphenyl)butane | | | | | | | |

**[Table 8]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 9-1 | AO-1 P-1 | 0.005 0.015 | AO-6 P-1 | 0.070 0.050 | 0.14 | 2.4 | 96 |
| Comparative Example 14-1 | AO-1 AO-6 P-1 | 0.005 0.070 0.065 | - | - | 0.14 | 3.1 | 66 |
| Comparative Example 14-2 | AO-6 P-1 | 0.075 0.065 | - | - | 0.14 | 3.1 | 58 |
| Comparative Example 14-3 | - | - | AO-6 P-1 | 0.075 0.065 | 0.14 | 2.8 | 56 |
| Comparative Example 14-4 | - | - | AO-1 AO-6 P-1 | 0.005 0.070 0.065 | 0.14 | 2.8 | 64 |
| Comparative Example 14-5 | - | - | AO-6 P-1 | 0.100 0.100 | 0.20 | 3.2 | 96 |

| | | | | | | | |
|---|---|---|---|---|---|---|---|
| AO-6: 4,4'-butylidenebis(3-methyl-6-t-butylphenol) | | | | | | | |

**[Table 9]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 10-1 | AO-1 P-1 | 0.005 0.015 | AO-7 P-1 | 0.070 0.050 | 0.14 | 2.3 | 120 |
| Comparative Example 15-1 | AO-1 AO-7 P-1 | 0.005 0.070 0.065 | - | - | 0.14 | 2.6 | 78 |
| Comparative Example 15-2 | AO-1 P-1 | 0.055 0.045 | - | - | 0.10 | 3.2 | 120 |
| Comparative Example 15-3 | AO-7 P-1 | 0.075 0.065 | - | - | 0.14 | 2.6 | 60 |
| Comparative Example 15-4 | - | - | AO-7 P-1 | 0.075 0.065 | 0.14 | 2.4 | 84 |
| Comparative Example 15-5 | - | - | AO-1 AO-7 P-1 | 0.005 0.070 0.065 | 0.14 | 2.4 | 96 |
| Comparative Example 15-6 | - | - | AO-7 P-1 | 0.100 0.100 | 0.20 | 2.7 | 120 |

| | | | | | | | |
|---|---|---|---|---|---|---|---|
| AO-7: 1,3,5-tris(3,5-di-t-butyl-4-hydroxybenzyl)-s-triazine-2,4,6(1H,3H,5H)trione | | | | | | | |

**[Table 10]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 11-1 | AO-1 P-1 | 0.005 0.015 | AO-8 P-1 | 0.070 0.050 | 0.14 | 2.4 | 1320 |
| Comparative Example 16-1 | AO-1 AO-8 P-1 | 0.005 0.070 0.065 | - | - | 0.14 | 3.0 | 624 |
| Comparative Example 16-2 | AO-8 P-1 | 0.075 0.065 | - | - | 0.14 | 3.2 | 624 |
| Comparative Example 16-3 | - | - | AO-8 P-1 | 0.075 0.065 | 0.14 | 2.7 | 936 |
| Comparative Example 16-4 | - | - | AO-1 AO-8 P-1 | 0.005 0.070 0.065 | 0.14 | 2.7 | 864 |
| Comparative Example 16-5 | - | - | AO-8 P-1 | 0.100 0.100 | 0.20 | 3.1 | 1344 |

| | | | | | | | |
|---|---|---|---|---|---|---|---|
| AO-8: 3,9-bis{1,1-dimethyl-2-[β-(3-t-butyl-4-hydroxy-5-methylphenyl)propionyloxy]ethyl}-2,4,8,10-tetraoxaspiro[5,5]undecane | | | | | | | |

**[Table 11]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 12-1 | AO-1 P-1 | 0.005 0.015 | AO-9 P-1 | 0.070 0.050 | 0.14 | 3.0 | 288 |
| Comparative Example 17-1 | AO-1 AO-9 P-1 | 0.005 0.070 0.065 | - | - | 0.14 | 4.3 | 216 |
| Comparative Example 17-2 | AO-9 P-1 | 0.075 0.065 | - | - | 0.14 | 4.5 | 240 |
| Comparative Example 17-3 | - | - | AO-9 P-1 | 0.075 0.065 | 0.14 | 3.7 | 216 |
| Comparative Example 17-4 | - | - | AO-1 AO-9 P-1 | 0.005 0.070 0.065 | 0.14 | 3.4 | 192 |
| Comparative Example 17-5 | - | - | AO-9 P-1 | 0.100 0.100 | 0.20 | 4.2 | 288 |

| | | | | | | | |
|---|---|---|---|---|---|---|---|
| AO-9: 1,3,5-trimethyl-2,4,6-tris(3,5-di-t-butyl-4-hydroxybenzyl)benzene | | | | | | | |

**[Table 12]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 13-1 | AO-1 P-1 | 0.005 0.015 | AO-2 P-2 | 0.070 0.050 | 0.14 | 2.3 | 1368 |
| Comparative Example 18-1 | AO-1 AO-2 P-1 P-2 | 0.005 0.070 0.015 0.050 | - | - | 0.14 | 2.7 | 648 |
| Comparative Example 18-2 | AO-1 P-2 | 0.075 0.065 | - | - | 0.14 | 3.2 | 168 |
| Comparative Example 18-3 | AO-2 P-2 | 0.075 0.065 | - | - | 0.14 | 2.8 | 696 |
| Comparative Example 18-4 | - | - | AO-1 P-2 | 0.075 0.065 | 0.14 | 2.6 | 168 |
| Comparative Example 18-5 | - | - | AO-2 P-2 | 0.075 0.065 | 0.14 | 2.6 | 960 |
| Comparative Example 18-6 | - | - | AO-1 AO-2 P-1 P-2 | 0.005 0.070 0.015 0.050 | 0.14 | 2.5 | 888 |
| Comparative Example 18-7 | - | - | AO-2 P-2 | 0.100 0.100 | 0.20 | 3.1 | 1392 |

| | | | | | | | |
|---|---|---|---|---|---|---|---|
| P-2: bis(2,6-di-t-butyl-4-methylphenyl)pentaerythritol diphosphite | | | | | | | |

**[Table 13]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 14-1 | AO-1 P-1 | 0.005 0.015 | AO-1 P-3 | 0.070 0.050 | 0.14 | 2.5 | 1320 |
| Comparative Example 19-1 | AO-1 AO-2 P-1 P-2 | 0.005 0.070 0.015 0.050 | - | - | 0.14 | 3.2 | 624 |
| Comparative Example 19-2 | AO-1 P-3 | 0.075 0.065 | - | - | 0.14 | 3.4 | 168 |
| Comparative Example 19-3 | AO-2 P-3 | 0.075 0.065 | - | - | 0.14 | 3.3 | 672 |
| Comparative Example 19-4 | - | - | AO-1 P-3 | 0.075 0.065 | 0.14 | 3.1 | 168 |
| Comparative Example 19-5 | - | - | AO-2 P-3 | 0.075 0.065 | 0.14 | 3.0 | 936 |
| Comparative Example 19-6 | - | - | AO-1 AO-2 P-1 P-3 | 0.005 0.070 0.015 0.050 | 0.14 | 2.9 | 864 |
| Comparative Example 19-7 | - | - | AO-1 P-3 | 0.100 0.100 | 0.20 | 3.3 | 1320 |

| | | | | | | | |
|---|---|---|---|---|---|---|---|
| P-3: 2,2'-methylenebis(4,6-di-t-butylphenyl)octyl phosphite | | | | | | | |

**[Table 14]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 15-1 | AO-1 P-1 | 0.005 0.015 | AO-1 P-4 | 0.070 0.050 | 0.14 | 2.9 | 1392 |
| Comparative Example 20-1 | AO-1 AO-2 P-1 P-4 | 0.005 0.070 0.015 0.050 | - | - | 0.14 | 3.6 | 648 |
| Comparative Example 20-2 | AO-1 P-4 | 0.075 0.065 | - | - | 0.14 | 3.9 | 192 |
| Comparative Example 20-3 | AO-2 P-4 | 0.075 0.065 | - | - | 0.14 | 3.7 | 710 |
| Comparative Example 20-4 | - | - | AO-1 P-4 | 0.075 0.065 | 0.14 | 3.6 | 192 |
| Comparative Example 20-5 | - | - | AO-2 P-4 | 0.075 0.065 | 0.14 | 3.4 | 984 |
| Comparative Example 20-6 | - | - | AO-1 AO-2 P-1 P4 | 0.005 0.070 0.015 0.050 | 0.14 | 3.3 | 912 |
| Comparative Example 20-7 | - | - | AO-2 P-4 | 0.100 0.100 | 0.20 | 3.9 | 1392 |

| | | | | | | | |
|---|---|---|---|---|---|---|---|
| P-4: tetrakis(2,4-di-t-butylphenyl)-4,4'-biphenylene diphosphonite | | | | | | | |

**[Table 15]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 16-1 | AO-1 P-1 | 0.005 0.015 | AO-1 P-5 | 0.070 0.050 | 0.14 | 2.3 | 1296 |
| Comparative Example 31-1 | AO-1 AO-2 P-1 P-5 | 0.005 0.070 0.015 0.050 | - | - | 0.14 | 2.8 | 600 |
| Comparative Example ? 21-2 | AO-1 P-5 | 0.075 0.065 | - | - | 0.14 | 3.0 | 168 |
| Comparative Example 21-3 | AO-2 P-5 | 0.075 0.065 | - | - | 0.14 | 3.0 | 648 |
| Comparative Example 21-4 | - | - | AO-1 P-5 | 0.075 0.065 | 0.14 | 2.7 | 168 |
| Comparative Example 21-5 | - | - | AO-2 P-5 | 0.075 0.065 | 0.14 | 2.7 | 936 |
| Comparative Example 21-6 | - | - | AO-1 AO-2 P-1 P-5 | 0.005 0.070 0.015 0.050 | 0.14 | 2.6 | 840 |
| Comparative Example 31-7 | - | - | AO-2 P-5 | 0.100 0.100 | 0.20 | 3.1 | 1320 |

| | | | | | | | |
|---|---|---|---|---|---|---|---|
| P-5: distearylpentaerythritol diphosphite | | | | | | | |

**[Table 16]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 17-1 | AO-1 P-1 | 0.005 0.015 | AO-1 P-6 | 0.070 0.050 | 0.14 | 2.3 | 1344 |
| Comparative Example 22-1 | AO-1 AO-2 P-1 P-6 | 0.005 0.070 0.015 0.050 | - | - | 0.14 | 3.0 | 624 |
| Comparative Example 22-2 | AO-1 P-6 | 0.075 0.065 | - | - | 0.14 | 3.0 | 168 |
| Comparative Example 22-3 | AO-2 P-6 | 0.075 0.065 | - | - | 0.14 | 3.1 | 672 |
| Comparative Example 22-4 | - | - | AO-1 P-6 | 0.075 0.065 | 0.14 | 2.7 | 168 |
| Comparative Example 22-5 | - | - | AO-2 P-6 | 0.075 0.065 | 0.14 | 2.8 | 960 |
| Comparative Example 22-6 | - | - | AO-1 AO-2 P-1 P-6 | 0.005 0.070 0.015 0.050 | 0.14 | 2.7 | 888 |
| Comparative Example 22-7 | - | - | AO-2 P-6 | 0.100 0.100 | 0.20 | 3.1 | 1368 |

| | | | | | | | |
|---|---|---|---|---|---|---|---|
| P-6: bis(2,4-di-t-butylphenyl)pentaerythritol diphosphite | | | | | | | |

**[Table 17]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 18-1 | AO-1 P-1 | 0.005 0.015 | AO-4 P-6 | 0.070 0.050 | 0.14 | 1.9 | 216 |
| Comparative Example 23-1 | AO-1 AO-4 P-1 P-6 | 0.005 0.070 0.015 0.050 | - | - | 0.14 | 2.4 | 96 |
| Comparative Example 23-2 | AO-1 P-6 | 0.075 0.065 | - | - | 0.14 | 3.0 | 168 |
| Comparative Example 23-3 | AO-4 P-6 | 0.075 0.065 | - | - | 0.14 | 2.4 | 96 |
| Comparative Example 23-4 | - | - | AO-1 P-6 | 0.075 0.065 | 0.14 | 2.7 | 168 |
| Comparative Example 23-5 | - | - | AO-4 P-6 | 0.075 0.065 | 0.14 | 2.2 | 168 |
| Comparative Example 23-6 | - | - | AO-1 AO-4 P-1 P-6 | 0.005 0.070 0.015 0.050 | 0.14 | 2.1 | 168 |
| Comparative Example 23-7 | - | - | AO-4 P-6 | 0.100 0.100 | 0.20 | 2.5 | 216 |

**[Table 18]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 19-1 | AO-1 P-1 | 0.005 0.015 | AO-8 P-5 | 0.070 0.050 | 0.14 | 2.0 | 1368 |
| Comparative Example 24-1 | AO-1 AO-8 P-1 P-5 | 0.005 0.070 0.015 0.050 | - | - | 0.14 | 2.5 | 648 |
| Comparative Example 24-2 | AO-1 P-5 | 0.075 0.065 | - | - | 0.14 | 2.5 | 168 |
| Comparative Example 24-3 | AO-8 P-5 | 0.075 0.065 | - | - | 0.14 | 2.6 | 696 |
| Comparative Example 24-4 | - | - | AO-1 P-5 | 0.075 0.065 | 0.14 | 2.7 | 168 |
| Comparative Example 24-5 | - | - | AO-8 P-5 | 0.075 0.065 | 0.14 | 2.4 | 984 |
| Comparative Example 24-6 | - | - | AO-1 AO-8 P-1 P-5 | 0.005 0.070 0.015 0.050 | 0.14 | 2.3 | 912 |
| Comparative Example 24-7 | - | - | AO-8 P-5 | 0.100 0.100 | 0.20 | 2.8 | 1392 |

**[Table 19]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 20-1 | AO-1 P-1 | 0.005 0.015 | AO-2 P-1 S-1 | 0.070 0.050 0.07 | 0.21 | 3.3 | 2208 |
| Comparative Example 25-1 | AO-1 AO-2 P-1 S-1 | 0.005 0.070 0.065 0.070 | - | - | 0.21 | 4.2 | 1032 |
| Comparative Example 25-2 | AO-1 P-1 S-1 | 0.075 0.065 0.070 | - | - | 0.21 | 4.3 | 288 |
| Comparative Example 25-3 | AO-2 P-1 S-1 | 0.075 0.065 0.070 | - | - | 0.21 | 4.3 | 1128 |
| Comparative Example 25-4 | - | - | AO-1 P-1 S-1 | 0.075 0.065 0.070 | 0.21 | 3.9 | 408 |
| Comparative Example 25-5 | - | - | AO-2 P-1 S-1 | 0.075 0.065 0.070 | 0.21 | 3.9 | 1584 |
| Comparative Example 25-6 | - | - | AO-1 AO-2 P-1 S-1 | 0.005 0.070 0.065 0.070 | 0.21 | 3.8 | 1464 |
| Comparative Example 25-7 | - | - | AO-2 P-1 S-1 | 0.075 0.065 0.100 | 0.24 | 4.2 | 2184 |

| | | | | | | | |
|---|---|---|---|---|---|---|---|
| S-1: dilauryl-3,3'-thiodipropionate | | | | | | | |

**[Table 20]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 31-1 | AO-1 P-1 | 0.005 0.015 | AO-2 P-1 S-2 | 0.070 0.050 0.07 | 0.21 | 3.5 | 2904 |
| Comparative Example 26-1 | AO-1 AO-2 P-1 S-2 | 0.005 0.070 0.065 0.070 | - | - | 0.21 | 4.3 | 1248 |
| Comparative Example 26-2 | AO-1 P-1 S-2 | 0.075 0.065 0.070 | - | - | 0.21 | 4.4 | 336 |
| Comparative Example 26-3 | AO-2 P-1 S-2 | 0.075 0.065 0.070 | - | - | 0.21 | 4.4 | 1368 |
| Comparative Example 26-4 | - | - | AO-1 P-1 S-2 | 0.075 0.065 0.070 | 0.21 | 4.0 | 480 |
| Comparative Example 26-5 | - | - | AO-2 P-1 S-2 | 0.075 0.065 0.070 | 0.21 | 4.0 | 1896 |
| Comparative Example 26-6 | - | - | AO-1 AO-2 P-1 S-2 | 0.005 0.070 0.065 0.070 | 0.21 | 3.9 | 1752 |
| Comparative Example 26-7 | - | - | AO-2 P-1 S-2 | 0.075 0.065 0.100 | 0.24 | 4.4 | 2640 |

| | | | | | | | |
|---|---|---|---|---|---|---|---|
| S-2: ditridecyl-3,3'-thiodipropionate | | | | | | | |

**[Table 21]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compotnd | Added amount [parts by mass] | Compound | Added amount [parts by mass] | | Initial Y.I. | Crack generation [hours] |
| Example 22-1 | AO-1 P-1 | 0.005 0.015 | AO-2 P-1 S-3 | 0.070 0.050 0.07 | 0.21 | 3.4 | 3624 |
| Comparative Example 27-1 | AO-1 AO-2 P-1 S-3 | 0.005 0.070 0.065 0.070 | - | - | 0.21 | 4.3 | 1656 |
| Comparative Example 27-2 | AO-1 P-1 S-3 | 0.075 0.065 0.070 | - | - | 0.21 | 4.3 | 456 |
| Comparative Example 27-3 | AO-2 P-1 S-3 | 0.075 0.065 0.070 | - | - | 0.21 | 4.4 | 1800 |
| Comparative Example 27-4 | - | - | AO-1 P-1 S-3 | 0.075 0.065 0.070 | 0.21 | 3.9 | 648 |
| Comparative Example 27-5 | - | - | AO-2 P-1 S-3 | 0.075 0.065 0.070 | 0.21 | 4.0 | 2496 |
| Comparative Example 27-6 | - | - | AO-1 AO-2 P-1 S-3 | 0.005 0.070 0.065 0.070 | 0.21 | 3.9 | 2304 |
| Comparative Example 27-7 | - | - | AO-2 P-1 S-3 | 0.075 0.065 0.100 | 0.24 | 4.4 | 3600 |

| | | | | | | | |
|---|---|---|---|---|---|---|---|
| S-3: distearyl-3,3'-thiodipropionate | | | | | | | |

**[Table 22]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass 1 | | Initial Y.I. | Crack generation [hours] |
| Example 23-1 | AO-1 P-1 | 0.005 0.015 | AO-2 P-1 S-4 | 0.070 0.050 0.07 | 0.21 | 3.2 | 6072 |
| Comparative Example 28-1 | AO-1 AO-2 P-1 S-4 | 0.005 0.070 0.065 0.070 | - | - | 0.21 | 4.0 | 2832 |
| Comparative Example 28-2 | AO-1 P-1 S-4 | 0.075 0.065 0.070 | - | - | 0.21 | 4.0 | 792 |
| Comparative Example 28-3 | AO-2 P-1 S-4 | 0.075 0.065 0.070 | - | - | 0.21 | 4.2 | 3072 |
| Comparative Example 28-4 | - | - | AO-1 P-1 S-4 | 0.075 0.065 0.070 | 0.21 | 3.7 | 1104 |
| Comparative Example 28-5 | - | - | AO-2 P-1 S-4 | 0.075 0.065 0.070 | 0.21 | 3.8 | 4296 |
| Comparative Example 28-6 | - | - | AO-1 AO-2 P-1 S-4 | 0.005 0.070 0.065 0.070 | 0.21 | 3.7 | 3960 |
| Comparative Example 28-7 | - | - | AO-2 P-1 S-4 | 0.075 0.065 0.100 | 0.24 | 4.1 | 6120 |

| | | | | | | | |
|---|---|---|---|---|---|---|---|
| S-4: tetrakis[methylene-3-(laurylthio)propionate]methane | | | | | | | |

**[Table 23]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 24-1 | AO-1 P-1 | 0.005 0.015 | AO-2 P-1 S-5 | 0.070 0.050 0.07 | 0.21 | 4.4 | 7200 |
| Comparative Example 29-1 | AO-1 AO-2 P-1 S-5 | 0.005 0.070 0.065 0.070 | - | - | 0.21 | 5.4 | 3360 |
| Comparative Example 29-2 | AO-1 P-1 S-5 | 0.075 0.065 0.070 | - | - | 0.21 | 5.4 | 934 |
| Comparative Example 29-3 | AO-2 P-1 S-5 | 0.075 0.065 0.070 | - | - | 0.21 | 5.5 | 3648 |
| Comparative Example 29-4 | - | - | AO-1 P-1 S-5 | 0.075 0.065 0.070 | 0.21 | 4.9 | 1296 |
| Comparative Example 29-5 | - | - | AO-2 P-1 S-5 | 0.075 0.065 0.070 | 0.21 | 5.1 | 5112 |
| Comparative Example 29-6 | - | - | AO-1 AO-2 P-1 S-5 | 0.005 0.070 0.065 0.070 | 0.21 | 4.9 | 4704 |
| Comparative Example 29-7 | - | - | AO-2 P-1 S-5 | 0.075 0.065 0.100 | 0.24 | 5.6 | 7272 |

| | | | | | | | |
|---|---|---|---|---|---|---|---|
| S-5: thiobis-[2-t-butyl-5-methyl-4,1-phenylene]bis[3-(dodecylthio)propionate] | | | | | | | |

**[Table 24]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass] | | Initial Y.I. | Crack generation [hours] |
| Example 25-1 | AO-1 P-2 | 0.005 0.015 | AO-2 P-1 | 0.070 0.050 | 0.14 | 2.5 | 1320 |
| Comparative Example 30-1 | AO-1 P-2 | 0.005 0.015 | - | - | 0.02 | 2.0 | 26 |
| Comparative Example 30-2 | AO-1 AO-2 P-1 P-2 | 0.005 0.070 0.050 0.015 | - | - | 0.14 | 2.7 | 696 |
| Comparative Example 30-3 | AO-1 P-2 | 0.075 0.065 | - | - | 0.14 | 3.2 | 168 |
| Comparative Example 30-4 | AO-2 P-2 | 0.075 0.065 | - | - | 0.14 | 2.8 | 696 |
| Comparative Example 30-5 | - | - | AO-1 P-2 | 0.075 0.065 | 0.14 | 2.6 | 168 |
| Comparative Example 30-6 | - | - | AO-2 P-2 | 0.075 0.065 | 0.14 | 2.6 | 984 |
| Comparative Example 30-7 | - | - | AO-1 AO-2 P-1 P-2 | 0.005 0.070 0.050 0.015 | 0.14 | 2.5 | 912 |

**[Table 25]**

| | Addition at the time of polymerization Stabilizer composition | | Addition at the time of granulation Stabilizer composition | | Total amount of stabilizer composition [parts by mass] | Measurement evaluation | |
|---|---|---|---|---|---|---|---|
| | Compound | Added amount [parts by mass] | Compound | Added amount [parts by mass | | Initial Y.I. | Crack generation [hours] |
| Example 26-1 | AO-1 P-3 | 0.005 0.015 | AO-8 P-5 | 0.070 0.050 | 0.14 | 1.9 | 1416 |
| Comparative Example 31-1 | AO-1 P-3 | 0.005 0.015 | - | - | 0.02 | 2.0 | 25 |
| Comparative Example 31-3 | AO-1 AO-8 P-3 P-5 | 0.005 0.070 0.015 0.050 | - | - | 0.14 | 2.6 | 696 |
| Comparative Example 31-3 | AO-1 P-3 | 0.075 0.065 | - | - | 0.14 | 3.4 | 168 |
| Comparative Example 31-4 | AO-8 P-3 | 0.075 0.065 | - | - | 0.14 | 2.7 | 696 |
| Comparative Example 31-5 | AO-1 P-5 | 0.075 0.065 | - | - | 0.14 | 3.0 | 168 |
| Comparative Example 31-6 | AO-8 P-5 | 0.075 0.065 | - | - | 0.14 | 2.6 | 696 |
| Comparative Example 31-7 | - | - | AO-1 P-3 | 0.075 0.065 | 0.14 | 3.1 | 168 |
| Comparative Example 31-8 | - | - | AO-8 P-3 | 0.075 0.065 | 0.14 | 2.5 | 984 |
| Comparative Example 31-9 | - | - | AO-1 P-5 | 0.075 0.065 | 0.14 | 2.5 | 168 |
| Comparative Example 31-10 | - | - | AO-8 P-5 | 0.075 0.065 | 0.14 | 2.4 | 984 |
| Comparative Example 31-11 | - | - | AO-1 AO-8 P-3 P-5 | 0.005 0.070 0.015 0.050 | 0.14 | 2.4 | 936 |
| Comparative Example 31-12 | - | - | AO-8 P-5 | 0.100 0.100 | 0.20 | 2.7 | 1392 |

According to the results shown in the above Tables 4 to 25, when the method of producing a polymer according to the present invention was not employed, the resulting polymers were not satisfactory in either or both of the color tone (initial Y.I.) and the long-term stability (crack generation).

In contrast, those polymers obtained by the production method according to the present invention were confirmed to exhibit good color tone and good long-term stability.

## Claims

1. A method of producing a polymer, which is **characterized by** comprising the steps of:
polymerizing a monomer having an ethylenically unsaturated bond with an addition of 0.0001 to 0.3 parts by mass of a phenolic antioxidant represented by the following Formula (2), which is masked with an organoaluminum compound, and 0.0001 to 0.3 parts by mass of a phosphorus-based antioxidant with respect to 100 parts by mass of a polymer obtained in this polymerization step, said addition being made to at least one of a catalyst system, a polymerization system and a piping before or during polymerization of said monomer having an ethylenically unsaturated bond; and
melt-kneading said polymer obtained in said polymerization step with an addition of a total of 0.001 to 3 parts by mass of a phenolic antioxidant and/or a phosphorus-based antioxidant with respect to 100 parts by mass of said polymer: 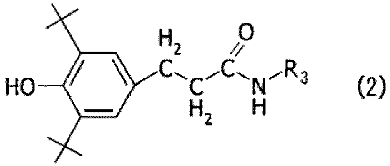
(wherein, R₃ represents an alkyl group having 1 to 30 carbon atoms which is optionally branched, a cycloalkyl group having 3 to 12 carbon atoms which is optionally substituted or an aryl group having 6 to 18 carbon atoms which is optionally substituted).

2. The method according to claim 1, wherein, in said polymerization step, said phenolic antioxidant represented by said Formula (2), which is masked with an organoaluminum compound, and said phosphorus-based antioxidant are added to said catalyst system, said polymerization system or said piping in a total amount of 0.001 to 0.5 parts by mass with respect to 100 parts by mass of said polymer obtained in said polymerization step.

3. The method according to claim 1, wherein said organoaluminum compound is triethylaluminum.

4. The method according to claim 1, wherein, in said melt-kneading step, a thioether-based antioxidant is further added in an amount of 0.001 to 0.3 parts by mass with respect to 100 parts by mass of said polymer obtained in said polymerization step.

## Patentansprüche

1. Verfahren zum Herstellen eines Polymers, das **gekennzeichnet ist durch** Umfassen der folgenden Schritte:
Polymerisieren eines Monomers mit einer ethylenisch ungesättigten Bindung mit einem Zusatz von 0,0001 bis 0,3 Massenanteilen eines phenolischen Antioxidationsmittels, dargestellt **durch** die folgende Formel (2), das mit einer aluminiumorganischen Verbindung verdeckt ist, und 0,0001 bis 0,3 Massenanteilen eines Antioxidationsmittels auf Phosphorbasis bezogen auf 100 Massenanteile eines in diesem Polymerisierungsschritt gewonnenen Polymers, wobei der Zusatz zu einem Katalysatorsystem, einem Polymerisierungssystem und/oder Rohrleitungen hinzugefügt wird, vor oder beim Polymerisieren des Monomers mit einer ethylenisch ungesättigten Bindung; und
Schmelzkneten des in dem Polymerisierungsschritt gewonnenen Polymers mit einem Zusatz von insgesamt 0,001 bis 3 Massenanteilen eines phenolischen Antioxidationsmittels und/oder eines Antioxidationsmittels auf Phosphorbasis bezogen auf 100 Massenanteile des Polymers: 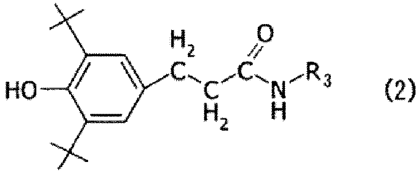
(wobei R₃ eine Alkylgruppe, die 1 bis 30 Kohlenstoffatome aufweist und optional verzweigt ist, eine Cycloalkylgruppe, die 3 bis 12 Kohlenstoffatome aufweist und optional substituiert ist, oder eine Arylgruppe, die 6 bis 18 Kohlenstoffatome aufweist und optional substituiert ist, darstellt).

2. Verfahren nach Anspruch 1, wobei, in dem Polymerisierungsschritt, das phenoische Antioxidationsmittel, dargestellt durch die Formel (2), das mit einer aluminiumorganischen Verbindung verdeckt ist, und das Antioxidationsmittel auf Phosphorbasis in einer Gesamtmenge von 0,001 bis 0,5 Massenanteilen bezogen auf 100 Massenanteile des in dem Polymerisierungsschritt gewonnenen Polymers zu dem Katalysatorsystem, dem Polymerisierungssystem oder der Rohrleitung hinzugefügt werden.

3. Verfahren nach Anspruch 1, wobei die aluminiumorganische Verbindung Triethylaluminium ist.

4. Verfahren nach Anspruch 1, wobei, in dem Schmelzknetschritt, ein Antioxidationsmittel auf Thioetherbasis ferner in einer Menge von 0,001 bis 0,3 Massenanteile bezogen auf 100 Massenanteile des in dem Polymerisierungsschritt gewonnenen Polymers hinzugefügt wird.

## Revendications

1. Procédé de production d'un polymère, qui est **caractérisé en ce qu'**il comprend les étapes de :
polymérisation d'un monomère ayant une liaison éthyléniquement insaturée avec une addition de 0,0001 à 0,3 partie en masse d'un antioxydant phénolique représenté par la formule (2) suivante, qui est masqué par un composé organoaluminium, et 0,0001 à 0,3 partie en masse d'un antioxydant à base de phosphore par rapport à 100 parties en masse d'un polymère obtenu dans cette étape de polymérisation, ladite addition étant réalisée à au moins l'un parmi un système de catalyseur, un système de polymérisation et une extrusion avant ou pendant la polymérisation dudit monomère ayant une liaison éthyléniquement insaturée ; et
le malaxage à l'état fondu dudit polymère obtenu dans ladite étape de polymérisation avec une addition d'un total de 0,001 à 3 parties en masse d'un antioxydant phénolique et/ou d'un antioxydant à base de phosphore par rapport à 100 parties en masse dudit polymère : 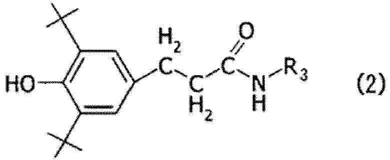
(dans lequel, R₃ représente un groupe alkyle ayant 1 à 30 atomes de carbone qui est facultativement ramifié, un groupe cycloalkyle ayant 3 à 12 atomes de carbone qui est facultativement substitué ou un groupe aryle ayant 6 à 18 atomes de carbone qui est facultativement substitué).

2. Procédé selon la revendication 1, dans lequel, dans ladite étape de polymérisation, ledit antioxydant phénolique représenté par ladite formule (2), qui est masqué par un composé organoaluminium, et ledit antioxydant à base de phosphore sont ajoutés audit système de catalyseur, audit système de polymérisation ou à ladite extrusion en une quantité totale de 0,001 à 0,5 partie en masse par rapport à 100 parties en masse dudit polymère obtenu dans ladite étape de polymérisation.

3. Procédé selon la revendication 1, dans lequel ledit composé organoaluminium est le triéthylaluminium.

4. Procédé selon la revendication 1, dans lequel, dans ladite étape de malaxage à l'état fondu, on ajoute en outre un antioxydant à base de thioéther dans une quantité de 0,001 à 0,3 partie en masse par rapport à 100 parties en masse dudit polymère obtenu dans ladite étape de polymérisation.
